# EUROPÄISCHE PATENTANMELDUNG

(11) **EP 4 682 330 A1**
(43) Veröffentlichungstag der Anmeldung: **21.01.2026**
(21) Anmeldenummer: 25188711.3
(22) Anmeldetag: 10.07.2025
(51) Int. Cl.: E04H 12/10, H02G 7/05, H02G 7/20, E04H 12/24

(54) **MAST, INSBESONDERE FREILEITUNGSMAST UND MODULARES MAST-SYSTEM ZUR ERRICHTUNG DES MASTES**

(30) Priorität: 10.07.2024 DE 102024119632
(71) Anmelder: Omexom Hochspannung GmbH, 29664 Walsrode (DE)
(72) Erfinder: Eggers, Daniel, 28832 Achim (DE)
(74) Vertreter: Gulde & Partner

(57) **Zusammenfassung**

Die Erfindung betrifft einen Mast (M), insbesondere einen Freileitungsmast, und ein modulares Mast-System zur Errichtung des Mastes (M), dessen Mastbauteile und Auflager modular ausgebildet sind.

## Beschreibung

Die Erfindung betrifft einen aus Mastbauteilen bestehenden Mast, insbesondere einen Freileitungsmast.

### Technologischer Hintergrund und Stand der Technik:

Hoch- und Höchstspannungsnetze sind ein wichtiger Bestandteil der regionalen und überregionalen Energieinfrastruktur. Insbesondere im Falle von geplanten Baumaßnahmen oder Havarien an bestehenden Leitungen ist es daher wichtig die Versorgung über temporäre Leitungen zu ermöglichen.

Aktuell werden Provisorien meist aus verankerten Baukastensystemen errichtet. Diese Systeme haben einen hohen Montageaufwand und einen großen Platzbedarf. Insbesondere in enger besiedelten Bereichen ist es daher schwierig provisorische Leitungen zu errichten.

Aus dem Stand der Technik sind Freileitungsmaste bekannt, wobei auf die Druckschriften DE 20 2015 003 670 U1, DE 20 2015 003 671 U1, DE 20 2020 100 625 U1, DE 20 2015 003 668 U1 und WO 2017/ 012 708 A1 hingewiesen wird.

Insbesondere die Druckschrift DE 20 2015 003 670 U1 gibt an, dass der Begriff "Mast" als konstruktive Vorrichtung zu verstehen ist, die in Gebrauchslage zumindest im Wesentlichen vertikal ausgerichtet beziehungsweise aufgestellt ist und/oder sich zumindest im Wesentlichen orthogonal vom Boden in die Höhe erstreckt. Vorzugsweise ist ein Mast ein längliches Bauwerk, dessen vertikale Erstreckung vorzugsweise ein Vielfaches seiner horizontalen Erstreckung ist. Insbesondere ist ein Mast eine konstruktive Vorrichtung zum Tragen, Aufhängen, Abspannen und/oder Führen einer elektrischen Freileitung. Besonders bevorzugt ist ein Mast als Tragmast, Abspannmast, Abzweigmast, Kabelendmast und/oder Verdrillmast ausgebildet. Der Mast im Sinne der vorliegenden Erfindung ist als Gittermast ausgebildet beziehungsweise weist der Mast eine gitterartige Struktur beziehungsweise eine Fachwerkskonstruktion auf. Der Mast kann jedoch auch als Holzmast, Betonmast und/oder Stahlrohrmast ausgebildet sein. Der Mast kann im Sinne der vorliegenden Erfindung ein Sende-, Antennen-, Funk- oder Telefonmast und/oder ein Turm oder dergleichen sein. Diese Begriffsbestimmung und insbesondere die Verwendung des Mastes als Tragmast, Abspannmast, Abzweigmast, Kabelendmast und/oder Verdrillmast soll auch für den nachstehend beschriebenen erfindungsgemäßen Mast beziehungsweise ein Mast-System gelten, wobei der erfindungsgemäße Mast beziehungsweise das Mast-System, insbesondere ein Stahlmast ist.

Der vorliegenden Erfindung liegt die Aufgabe zugrunde, einen verbesserten Mast, insbesondere einen Freileitungsmast, anzugeben, wobei eine kostengünstigere, stabilere, sicherere und einfachere, das heißt, schnellere Montage beziehungsweise Demontage möglich sein soll, wobei bei der Errichtung des Mastes an einem vorgesehenen Aufstellort eine einfache Anpassung an einen vorhandenen Geländeverlauf des den Aufstellort umgebenden Geländes möglich sein soll.

Ausgangspunkt der Erfindung ist ein Mast, der eine Stützstruktur und mindestens zwei vormontierte Mastschuss-Module aufweist, die im Zusammenbauzustand einen Mastschaft bilden, wobei den mindestens zwei Mastschuss-Modulen im Zusammenbauzustand mindestens zwei vormontierte Verbindungs-Module zugeordnet sind.

Der Mast weist im Zusammenbauzustand zumindest folgende die Erfindung charakterisierende Mastbauteile auf, die miteinander in einer ebenfalls den Mast charakterisierenden Verbindung stehen.

Es ist vorgesehen, dass ein erstes Mastschuss-Modul auf einem bodenseitig angeordneten Fußhorizontalrahmen-Verbindungs-Modul eines ersten Verbindungs-Modultyps an einem Aufstellort angeordnet und mit der Stützstruktur verbunden ist.

Ferner ist vorgesehen, dass das erste Mastschuss-Modul und mindestens ein weiteres Mastschuss-Modul über ein Horizontalrahmen-Verbindungsmodul eines zweiten Verbindungs-Modultyps mit der Stützstruktur miteinander verbunden sind.

Dabei ist vorgesehen, dass die Verbindungs-Module des ersten und zweiten Verbindungs-Modultyps jeweils Befestigungsglieder zur Befestigung von Stützelementen der Stützstruktur aufweisen.

In vorteilhafter Weise bildet diese Ausgestaltung, die durch die Stützstruktur abgestützte Mastschaft-Basis eines ersten Mastschuss-Moduls des Mastes, an der bereits ein weiteres (zweites) Mastschuss-Modul angeordnet ist. Der Mast ist durch noch weitere Mastschuss-Module erweiterbar, wie in den Ansprüchen und der Beschreibung näher erläutert ist.

Erfindungsgemäß ist weiter vorgesehen, dass das Fußhorizontalrahmen-Verbindungs-Modul rahmenfeste Verbindungszapfen aufweist, die im Zusammenbauzustand auf ihrer zu dem ersten Mastschuss-Modul ausgerichteten Seite von dem Fußhorizontalrahmen-Verbindungs-Modul hervorstehende Zapfenabschnitte aufweisen, in denen vorbereitete Bohrungsöffnungen ausgebildet sind.

Weiter ist erfindungsgemäß vorgesehen, dass das Horizontalrahmen-Verbindungsmodul ebenfalls rahmenfeste Verbindungszapfen aufweist, die auf ihrer im Zusammenbauzustand zu dem ersten Mastschuss-Modul ausgerichteten Seite und auf ihrer gegenüberliegenden Seite - zu dem weiteren Mastschuss-Modul ausgerichtet - von dem Horizontalrahmen-Verbindungsmodul hervorstehende Zapfenabschnitte bilden, in denen ebenfalls vorbereitete Bohrungsöffnungen ausgebildet sind.

Erfindungsgemäß ist weiter vorgesehen, dass eine Lage der Bohrungsbilder und eine Geometrie der vorbereiteten Bohrungsöffnungen der Bohrungsbilder in allen Zapfenabschnitten im Zusammenbauzustand mit einer Lage der Bohrungsbilder und einer Geometrie der vorbereiteten Bohrungsöffnungen der Bohrungsbilder in allen Aufnahmehülsen der Mastschuss-Module übereinstimmen.

Die Ausgestaltung der Aufnahmehülsen erfolgt erfindungsgemäß wie folgt:
Alle Aufnahmehülsen sind durch vertikale Eckstielprofile der vorgefertigten Mastschuss-Module und jeweils endseitig an den Eckstielprofilen angeordneten Profil-Abschnitten ausgebildet. Es werden erfindungsgemäß in vorteilhafter Weise einheitliche Aufnahmehülsen in jedem Eckstielprofil der Mastschuss-Module ausgebildet, die einheitlich endseitige Einstecköffnungen für die Zapfenabschnitte der rahmenfesten Verbindungszapfen bilden, die im Zusammenbauzustand in die Einstecköffnungen der Aufnahmehülsen eingesteckt und mittels Sicherungselementen ortsfest gesichert sind.

In vorteilhafter Weise kommen die Bohrungsöffnungen der Bohrungsbilder im Zusammenbauzustand in vorteilhafter Weise ausschließlich durch das Einstecken der Zapfenabschnitte in die Einstecköffnungen der zuvor und anschließend genannten Mastbauteile in eine derartige Lage, dass die Bohrungsöffnungen der Bohrungsbilder eine Durchstecköffnung für die Sicherungselemente bilden, mittels denen die Steckverbindung der Mastbauteile untereinander gesichert ist/wird.

Weitere Mastbauteile, die in einer Art "Modulbaukasten" zur Verfügung stehen, folgen dem zuvor erläuterten Ausgestaltungsprinzip, sodass die durch die Stützstruktur abgestützte Basis des Mastes, an der bereits ein weiteres Mastschuss-Modul angeordnet ist, sodass der Mast in vorteilhafter Weise erweiterbar ist.

Bevorzugt ist vorgesehen, dass der Mast ein Freileitungsmast ist.

Um mindestens eine Freileitung an dem Mast zu befestigen, umfasst der "Modulbaukasten" ein Horizontalrahmen-Verbindungsmodul eines dritten Verbindungs-Modultyps.

Vorgesehen ist, dass endseitig des mindestens einen weiteren Mastschuss-Moduls oder zwischen dem weiteren Mastschuss-Modul und einem noch weiteren Mastschuss-Modul ein Horizontalrahmen-Verbindungsmodul des dritten Verbindungs-Modultyps angeordnet ist, beziehungsweise angeordnet werden kann.

Dieses Horizontalrahmen-Verbindungsmodul weist in vorteilhafter Weise mindestens ein horizontal von dem Horizontalrahmen abkragendes Tragelement zum Tragen mindestens einer Freileitung auf.

Das Horizontalrahmen-Verbindungsmodul des dritten Verbindungs-Modultyps weist - wie erwähnt - in vorteilhafter Weise ebenfalls die rahmenfesten Verbindungszapfen auf, die auf ihrer im Zusammenbauzustand zu dem weiteren Mastschuss-Modul ausgerichteten Seite und auf ihrer gegenüberliegenden Seite zu dem noch weiteren Mastschuss-Modul ausgerichteten Seite von dem Horizontalrahmen-Verbindungsmodul hervorstehende Zapfenabschnitte bilden, in denen vorbereitete Bohrungsöffnungen ausgebildet sind.

Dabei ist analog zu den anderen Verbindungsmodulen vorgesehen, dass die Lage der Bohrungsbilder und die Geometrie der vorbereiteten Bohrungsöffnungen der Bohrungsbilder in den Zapfenabschnitten im Zusammenbauzustand ebenfalls mit der Lage der Bohrungsbilder und der Geometrie der vorbereiteten Bohrungsöffnungen der Bohrungsbilder in allen Aufnahmehülsen aller Mastschuss-Module übereinstimmen, wobei die Zapfenabschnitte im Zusammenbauzustand in die Einstecköffnungen der Aufnahmehülsen eingesteckt und mittels den Sicherungselementen ortsfest gesichert sind.

Eine bevorzugte Ausgestaltung der Erfindung besteht darin, die auch in der Beschreibung verdeutlicht ist, dass endseitig des mindestens einen weiteren Mastschuss-Moduls oder zwischen dem weiteren Mastschuss-Modul und einem noch weiteren Mastschuss-Modul das Horizontalrahmen-Verbindungsmodul des zweiten Verbindungs-Modultyps angeordnet ist.

Mit anderen Worten, das Horizontalrahmen-Verbindungsmodul des dritten Verbindungs-Modultyps, das zur Befestigung von Freileitungen dient, kann variabel an einer Verbindungsstelle zwischen zwei Mastschuss-Modulen angeordnet werden, wenn beispielsweise in Längserstreckung des Mastes gesehen zuvor mehrere Mastschuss-Module Horizontalrahmen-Verbindungsmodul des zweiten Verbindungs-Modultyps verbunden wurden.

Insgesamt steht somit ein in vorteilhafter Weise variabel ausgestaltbarer Mast zur Verfügung, dessen Mastschuss-Module durch den wahlweisen Einsatz der Horizontalrahmen-Verbindungsmodule des zweiten oder dritten Verbindungs-Modultyps des "Modulbaukasten" errichtet werden kann.

Darüber hinaus stellt der "Modulbaukasten" in bevorzugter Ausgestaltung der Erfindung eine weitere Verbindungsmöglichkeit zur Verfügung, um die Mastschuss-Module miteinander zu verbinden, die dem Ausgestaltungsprinzip folgt, wie nachfolgend deutlich wird.

Bevorzugt ist nämlich ferner vorgesehen, dass in den Einstecköffnungen der Aufnahmehülsen endseitig des mindestens einen weiteren Mastschuss-Moduls oder zwischen dem weiteren Mastschuss-Modul und einem noch weiteren Mastschuss-Modul Einzel-Verbindungszapfen angeordnet sind.

Die Einzel-Verbindungszapfen bilden auf ihrer im Zusammenbauzustand zu der dem weiteren Mastschuss-Modul ausgerichteten Seite und auf ihrer gegenüberliegenden Seite zu dem noch weiteren Mastschuss-Modul ausgerichteten Seite ebenfalls Zapfenabschnitte aus, in denen vorbereitete Bohrungsöffnungen ausgebildet sind.

Gemäß dem Ausgestaltungsprinzip stimmt die Lage der Bohrungsbilder und die Geometrie der vorbereiteten Bohrungsöffnungen der Bohrungsbilder in den Zapfenabschnitten des Einzel-Verbindungszapfens im Zusammenbauzustand ebenfalls mit der Lage der Bohrungsbilder und der Geometrie der vorbereiteten Bohrungsöffnungen der Bohrungsbilder in allen Aufnahmehülsen aller Mastschuss-Module überein, wobei die Zapfenabschnitte im Zusammenbauzustand in die Aufnahmehülsen der Einstecköffnungen eingesteckt und mittels Sicherungselementen ortsfest gesichert sind.

Mit anderen Worten, wenn Mastschuss-Module miteinander verbunden werden sollen, ohne weitere Anforderungen in den Verbindungstellen, wie Befestigungen mittels Befestigungsgliedern oder die Anordnung von Freileitungen mittels Tragarmen, so werden oder müssen in vorteilhafter Weise keine Horizontalrahmen-Verbindungsmodule des zweiten oder dritten Verbindungs-Modultyps des "Modulbaukasten" eingesetzt werden, sondern es können die Einzel-Verbindungszapfen des "Modulbaukastens" eingesetzt werden, sodass die jeweilige Verbindungstelle zwischen zwei Mastschuss-Modulen in noch einfacherer Weise hergestellt werden kann.

Bevorzugt ist vorgesehen, dass die Eckstielprofile der Mastschuss-Module des Mastes als L-Profile und die Profil-Abschnitte als L-Profil-Abschnitte ausgebildet sind, wobei die L-Profil-Abschnitte an den L-Profilen der Eckstielprofile derart fixiert, insbesondere verschweißt angeordnet sind, sodass sich rechteckige Aufnahmehülsen mit somit rechteckigen Einstecköffnungen bilden.

Vorgesehen ist somit bevorzugt, dass die Außenkonturen der Zapfenabschnitte rechteckig sind, wobei die Innenkonturen der Aufnahmehülsen hinsichtlich ihrer geometrischen Maße im Wesentlichen den geometrischen Maßen der Außenkontur der zwischen den Mastschuss-Modulen angeordneten Zapfenabschnitte der rahmenfesten Verbindungszapfen oder den Zapfenabschnitten der Einzel-Verbindungszapfen entsprechen, wobei die Zapfenabschnitte im Zusammenbauzustand mit Spiel, insbesondere geringem Spiel in die Aufnahmehülsen eingesteckt sind.

Zu dem "Modulbaukastens" gehört die Stützstruktur.

Die Stützstruktur umfasst vier erste Stützstreben zur Horizontalabstützung und vier zweite Stützstreben zur Vertikalabstützung des Mastschaftes.

Vorgesehen ist bevorzugt, dass die vier ersten Stützstreben zwischen dem Fußhorizontalrahmen-Verbindungs-Modul des ersten Verbindungs-Modultyps und je einem Auflager und die vier zweiten Stützstreben zwischen einem Horizontalrahmen-Verbindungsmodul des zweiten Verbindungs-Modultyps angeordnet sind.

In vorteilhafter Weise können die zur Vertikalabstützung vorgesehenen Stützstreben der Stützstruktur variabel an den Befestigungsgliedern der Horizontalrahmen-Verbindungsmodul des zweiten Verbindungs-Modultyps einends angeordnet werden.

Eine Grundlänge, der zur Vertikalabstützung vorgesehen Stützstreben, kann so ausgestaltet werden, dass das Horizontalrahmen-Verbindungsmodul des zweiten Verbindungs-Modultyps zwischen dem ersten und dem weiteren Mastschuss-Modul oder zwischen dem weiteren und einem noch weiteren Mastschuss-Modul angeordnet werden kann.

Mit anderen Worten, die zur Vertikalabstützung vorgesehen Stützstreben können einends an dem Horizontalrahmen-Verbindungsmodul des zweiten Verbindungs-Modultyps, das die Befestigungsglieder aufweist, zwischen dem ersten Mastschuss-Modul und dem weiteren (zweiten) Mastschuss-Modul oder zwischen dem weiteren (zweiten) und einem noch weiteren (dritten) angreifen, wie in der Beschreibung noch näher erläutert ist.

In bevorzugter Ausgestaltung der Erfindung ist vorgesehen, dass die Befestigungsglieder des Fußhorizontalrahmen-Verbindungs-Moduls des ersten Verbindungs-Modultyps und des Horizontalrahmen-Verbindungsmoduls des zweiten Verbindungs-Modultyps Flanschaugen sind, und die an den Auflagern angeordneten Befestigungsglieder ebenfalls Flanschaugen sind.

Ferner ist vorgesehen, dass die ersten Stützstreben und die zweiten Stützstreben jeweils endseitig Bohrungen, das heißt, Bohrungsöffnungen aufweisen.

Im Zusammenbauzustand ist vorgesehen, dass die Bohrungen der ersten Stützstreben einends und die Flanschaugen des Fußhorizontalrahmen-Verbindungs-Moduls nebeneinander liegend angeordnet sind.

Im Zusammenbauzustand ist vorgesehen, dass die Bohrungen der zweiten Stützstreben einends und die Flanschaugen des Horizontalrahmen-Verbindungsmoduls nebeneinander liegend angeordnet sind.

Im Zusammenbauzustand ist vorgesehen, dass die Bohrungen der ersten Stützstreben anderenends und die Bohrungen der zweiten Stützstreben anderenends an je einem Flanschauge der Auflager nebeneinander liegend angeordnet sind.

Es werden somit mastseitig in vorteilhafter Weise Öffnungs-Paarungen von Bohrungen der horizontalen und der vertikalen Stützstreben und der Flanschaugen an dem Fußhorizontalrahmen-Verbindungs-Modul des ersten Verbindungs-Modultyps und dem Horizontalrahmen-Verbindungsmodul des zweiten Verbindungs-Modultyps gebildet.

Weiter werden auflagerseitig Öffnungs-Paarungen von Bohrungen der horizontalen Stützstreben, der Flanschaugen der Auflager und der Bohrungen der vertikalen Stützstreben gebildet.

Die jeweiligen Öffnungs-Paarungen sind im Zusammenbauzustand durch Steckverbindungen gesichert, indem jeweils ein Sicherungselement, durch die jeweiligen Öffnungs-Paarungen gesteckt ist, sodass die ersten (horizontalen) und zweiten (vertikalen) Stützstreben um die Sicherungselemente drehbar jeweils einends lagefixiert am Mastschaft und jeweils anderenends an den Auflagern angeordnet sind.

In einer bevorzugten Ausgestaltung ist vorgesehen, dass die zweiten (vertikalen) Stützstreben neben der Maßgabe, dass sie die vorgebbare Grundlänge aufweisen, um das jeweilige Horizontalrahmen-Verbindungsmodul des zweiten Verbindungs-Modultyps, welches die Befestigungsglieder aufweist, zu erreichen, teleskopierbar aus Teilstreben ausgebildet sind.

Es ist bevorzugt vorgesehen, dass die zweiten (vertikalen) Stützstreben Teilstreben bilden, die an ihren dem Mastschaft und ihren dem Auflager gegenüberliegenden Enden ineinander/aneinander greifen und einen Eingriffsbereich bilden.

Die Teilstreben weisen in diesem Eingriffsbereich in bevorzugter Ausgestaltung der Erfindung ein vorgegebenes Bohrungsraster auf, sodass die Länge der zweiten Stützstreben - von der Grundlänge ausgehend - frei einstellbar ist, indem ein Sicherungselement in Abhängigkeit einer erforderlichen Länge der zweiten Stützstreben durch je eine Bohrung im Bohrungsraster der Teilstreben angeordnet ist.

Ferner ist bevorzugt vorgesehen, dass die Stützstruktur acht Leiterstrukturen umfasst, wobei zwei Grundholme als je eine Stützstrebe mit den jeweils endseitig ausgebildeten Bohrungen ausgebildet sind, wobei zwischen den Grundholmen ein Gitterfachwerk ausgebildet ist, das zwischen den Grundholmen ausgebildet ist, wobei vier der acht Leiterstrukturen mit den zwei Grundholmen als Teilgrundholme teleskopierbar ausgebildet sind und somit Teilstreben der zweiten Stützstreben bilden, sodass die zwei Grundholme der teleskopierbaren Leiterstrukturen ihren dem Mastschaft und ihren dem Auflager gegenüberliegenden Enden ineinander/aneinander greifen und den Eingriffsbereich bilden.

Insofern ist bevorzugt vorgesehen, dass jedes Auflager als Befestigungsglied/er ein Flanschauge oder bei Ausgestaltung der Stützstruktur als Leiterstruktur mehrere zueinander beabstandete Flanschaugen aufweist, sodass die endseitigen Bohrungen der ersten und zweiten Stützstreben oder endseitigen Bohrungen der Grundholme, der als Leiterstruktur ausgebildeten der Stützstruktur durch Sicherungselemente drehbar jeweils einends lagefixiert am Mastschaft und jeweils anderenends an den Auflagern an den Flanschaugen des Auflagers befestigt sind, wie durch die Beschreibung der Figuren noch näher verdeutlicht ist.

Zu dem "Modulbaukasten" gehört zu dem die Ausgestaltung der Auflager.

Bevorzugt ist vorgesehen, dass die Auflager als modular ausgebildete Auflastrahmen ausgebildet sind.

Die jeweiligen Auflastrahmen sind in sogenannten Modultypen dafür eingerichtet, dass
a) der Auflastrahmen auflastrahmenfeste Aufnahmen aufweist, sodass er an einem vorbereiteten Fundament als Gründung befestigt, insbesondere verschraubt werden kann, oder
b) der Auflastrahmen auflastrahmenfeste Aufnahmen aufweist, sodass gründungsfrei mindestens ein Auflastgewicht in die auflastrahmenfesten Aufnahmen eingebracht werden kann, oder
c) der Auflastrahmen auflastrahmenfeste Aufnahmen aufweist, die mindestens eine auflastrahmenfeste Aufnahme bilden, in der mindestens ein oder bei mehreren auflastrahmenfesten Aufnahmen ein oder mehrere Kleinverpresspfähle als Gründung, oderd) der Auflastrahmen auflastrahmenfeste Aufnahmen aufweist, die mindestens eine auflastrahmenfeste Aufnahme bilden, in der gegründete Fundamentschrauben angeordnet sind.

Bevorzugt ist vorgesehen, dass der Mast mittels der Stützstruktur bedarfsabhängig ausschließlich an Auflastrahmen eines Modultyps a) bis d) oder einer Kombination der Modultypen a) bis d) abgestützt ist.

Bevorzugt ist schließlich vorgesehen, dass der Auflastrahmen einen Anschlagsteg oder zur Befestigung der Leiterstrukturen mehrere Anschlagstege aufweist, der/die als Befestigungsglied/er mindestens ein Flanschauge oder an zueinander parallel beabstandeten Anschlagstegen jeweils mindestens ein Flanschauge aufweist.

Zusammenfassend wird ein modulares Mast-System zur Errichtung eines Mastes, insbesondere eines Freileitungsmastes, vorgestellt, dass die beschriebenen Mastbauteile und Auflager umfasst, wobei der Mast zumindest folgende Mastbauteile aufweist:
Mindestens zwei Mastschuss-Module gleicher oder unterschiedlicher Baulänge/n mit gleichartig ausgebildeten Aufnahmehülsen endseitig der Eckstielprofile der Mastschuss-Module.

Eine Stützstruktur.

Ein Fußhorizontalrahmen-Verbindungs-Modul eines ersten Verbindungs-Modultyps, das einseitig zu dem Fußhorizontalrahmen-Verbindungs-Modul ausgerichtete rahmenfeste Verbindungszapfen und Befestigungsglieder zur Befestigung an der Stützstruktur aufweist.

Mindestens ein Horizontalrahmen-Verbindungsmodul eines zweiten Verbindungs-Modultyps das beidseitig zu je einem Mastschuss-Modul ausgerichtete rahmenfeste Verbindungszapfen und Befestigungsglieder zur Befestigung der Stützstruktur aufweist.

Neben den Mastbauteilen sind Auflager in der Art von modular ausgebildeten Auflastrahmen vorgesehen:
Vorgesehen sind, vier Auflastrahmen eines Modultyps oder mehrerer Modultypen in Kombination als Auflager zum Abstützen des Mastes mittels der Stützstruktur, die zwischen dem Mast und den Auflagern angeordnet sind.

Soll der Mast als Freileitungsmast ausgebildet werden, umfasst der Mast mindestens ein Horizontalrahmen-Verbindungsmodul eines dritten Verbindungs-Modultyps, das beidseitig zu je einem Mastschuss-Modul ausgerichtete rahmenfeste Verbindungszapfen und mindestens ein horizontal von dem Horizontalrahmen-Verbindungsmodul abkragendes Tragelement zum Tragen mindestens einer Freileitung aufweist.

Ferner kann der Mast rahmenlose Einzel-Verbindungszapfen umfassen, die zur Verbindung der Mastschuss-Module dienen.

### Kurzbeschreibung der Figuren:

Die Erfindung wird nachfolgend anhand dazugehöriger Figuren näher erläutert. Die Figuren zeigen:
- Figur 1: einen erfindungsgemäßen modularen Mast in einer Zusammenbaudarstellung;
- Figur 2: den Mast gemäß Figur 1 in einer Explosionsdarstellung;
- Figur 3A: eine vergrößerte Darstellung einer ersten Verbindungsstelle in einer Explosionsdarstellung;
- Figur 3B: die erste Verbindungsstelle gemäß Figur 3A in einer Zusammenbaudarstellung
- Figur 4A: eine vergrößerte Darstellung einer dritten Verbindungsstelle in einer Explosionsdarstellung;
- Figur 4B: die dritte Verbindungsstelle gemäß Figur 4A in einer Zusammenbaudarstellung
- Figur 5A: eine Darstellung eines Mastfußes in einer Seitenansicht mit einer erfindungsgemäßen modularen Stützstruktur;
- Figur 5B: eine Darstellung des Mastfußes gemäß Figur 5A in einer Draufsicht ohne die Stützstruktur gemäß Figur 5A.

### Detaillierte Beschreibung der Erfindung anhand der Figuren:

Die Erfindung basiert auf dem Grundgedanken einen mobil einsetzbaren Mast zu schaffen, der aus stets wiederverwendbaren Mastbauteilen, bevorzugt Gittermastbauteilen ausgebildet ist.

Ein Aspekt der Erfindung besteht darin, die Mastbauteile und die zugehörigen Auflager als Module ausgebildet werden.

Der Fachmann kennt die Begriffe Mastschuss oder Mastschüsse. Die Module werden mittels Verbindungselementen miteinander verbunden. Die benötigten Verbindungselemente sind erfindungsgemäß ebenfalls modular ausgebildet, sodass nachfolgend von Mastschuss-Modulen und Verbindungselement-Modulen gesprochen wird.

Ein anderer Aspekt der Erfindung besteht darin, dass auch eine dem Mast zugeordnete Stützstruktur, die es in vorteilhafter Weise ermöglicht, den Mast, insbesondere den mobilen Mast (vorübergehend) schnell und einfach an unterschiedliche Geländeverläufe anzupassen, insbesondere abzustützen, modular ausgebildet ist.

Der beispielhaft dargestellte Mast M - bei dem alle Mastbauteile eines modularen Mast-Systems eingesetzt sind -, weist folgende Mastbauteile auf:
- Die Stützstruktur 1,
- beispielhaft mehrere Mastschuss-Module Sn (n = Anzahl = n-tes) der gleichen oder unterschiedlicher Länge, wobei gemäß Ausführungsbeispiel sechs Mastschuss-Module Sn (n= 1, 2, 3, 4, 5, 6) angeordnet sind;
- beispielhaft mehrere Verbindungs-Module Vn (n = Anzahl = n-tes) zur Verbindung der Mastschuss-Module Sn, wobei gemäß Ausführungsbeispiel fünf Verbindungselement-Module Vn (n = 101, 102, 103, 104, 105), die rahmenfesten Verbindungszapfen VZR mit den vorbereiteten einheitlichen Bohrungsbildern aufweisen, wobei bei dem beispielhaft dargestellten Mast M alle Verbindungs-Modultypen der vorgefertigtem Verbindungs-Module Vn angeordnet sind;
- beispielhaft eine Zapfenverbindung unter ausschließlicher Verwendung von rahmenlosen Einzel-Verbindungszapfen VZ, welche die vorbereiteten einheitlichen Bohrungsbilder aufweisen, mittels der zwei vorgefertigten Mastschuss-Module Sn, insbesondere das zweite Mastschuss-Modul S2 und das dritte Mastschuss-Modul S3 verbunden sind.

Detaillierte Beschreibung des beispielhaften Mastaufbaus des Mastes M unter Verwendung aller Mastbauteile des Mast-Systems

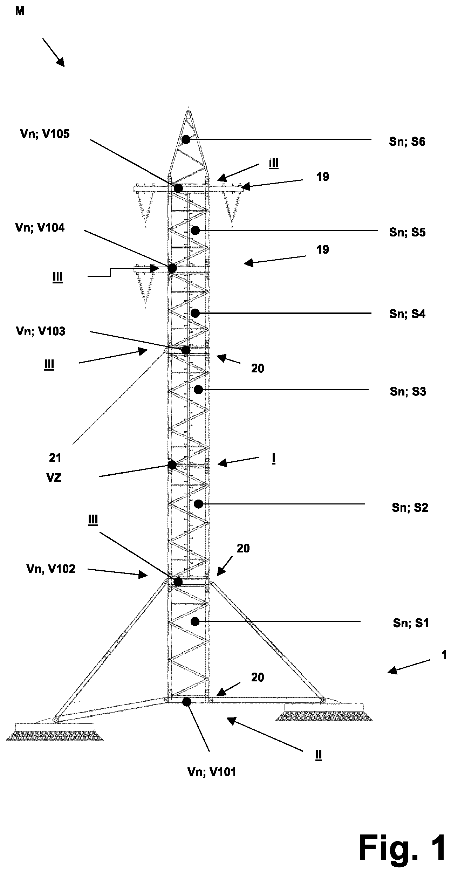

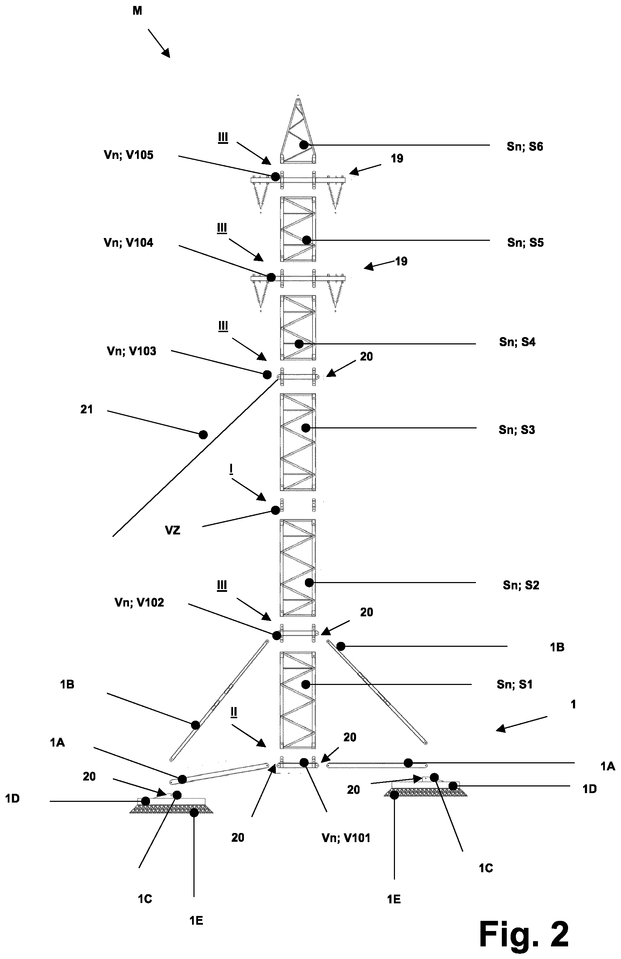

Die Figuren 1 und 2 werden nachfolgend in einer Zusammenschau erläutert.

Der Mast M weist im Ausführungsbeispiel sechs S-Module S1, S2, S3, S4, S5, S6 auf.

Bei dem beispielhaft gezeigten Mast M sind alle Verbindungs-Modultypen von V-Modulen verbaut, die zur Errichtung des Mastes M zur Verfügung stehen, beziehungsweise im Regelanwendungsfall benötigt werden, worauf noch detailliert eingegangen wird.

Der Mast M weist im Ausführungsbeispiel fünf V-Module V101, V102, V103, V104, V105 auf.

In der Zusammenschau der Figuren 1 und 2 wird deutlich, dass sich das V-Modul V101 von den V-Modulen V102 und V103 und den V-Modulen V104 und V105 unterscheidet.

Mit anderen Worten, zur Errichtung des Mastes M werden drei unterschiedliche Verbindungs-Modultypen von V-Modulen Vn bereitgestellt.

Erster Verbindungs-Modultyp: Ein Fußhorizontalrahmen-Verbindungs-Modul V101, kurz Fußhorizontalrahmen-V-Modul genannt, mit an dem Fußhorizontalrahmen angebrachten Befestigungsgliedern, insbesondere Flanschaugen 20,

Zweiter Verbindungs-Modultyp: Zwei Horizontalrahmen-Verbindungs-Module mit V102, V103, kurz Horizontalrahmen-V-Module genannt, mit an dem Horizontalrahmen angebrachten Befestigungsgliedern, insbesondere Flanschaugen 20.

Dritter Verbindungs-Modultyp: Zwei Horizontalrahmen-Verbindungs-Module V104, V105, kurz Horizontalrahmen-V-Module genannt, mit mindestens einem an dem Horizontalrahmen angebrachten Tragelementen, insbesondere mindestens einem in einer horizontalen Ebene horizontal auskragenden Tragarm 19 oder in der horizontalen Ebene gesehen gegenüberliegenden Tragarmen 19,

Alle V-Module Vn haben gemeinsam, dass sie eine Horizontalrahmen-Grundstruktur aufweisen, worauf noch eingegangen wird.

Der Mast M weist (vergleiche Figuren 1 und 2) im Ausführungsbeispiel neben der Stützstruktur 1 zunächst das erste V-Modul Vn als Fußhorizontalrahmen-V-Modul V101 auf.

Es schließt sich ein erstes S-Modul S1 an. Auf dem ersten S-Modul S1 ist als zweites V-Modul ein Horizontalrahmen-V-Modul V102 angeordnet. Weiter in vertikaler Richtung gesehen schließt sich ein zweites S-Modul S2 an, welches mit dem dritten S-Modul S3 in Verbindung steht. Diese S-Module S2, S3 sind mittels der Einzel-Verbindungszapfen VZ miteinander verbunden, worauf noch eingegangen wird.

Es folgt in vertikaler Richtung gesehen ein drittes V-Modul Vn, das Horizontalrahmen-V-Modul V103 und anschließend ein viertes S-Modul S4.

Das vierte S-Modul S4 trägt ein viertes V-Modul Vn, das Horizontalrahmen-V-Modul V104 auf dem ein weiteres, das fünfte S-Modul S5 angeordnet ist, welches wiederum ein V-Modul Vn, insbesondere das fünfte V-Modul Vn, insbesondere das Horizontalrahmen-V-Modul V105 trägt.

Auf dem Horizontalrahmen-V-Modul V105 ist als abschließender Mastschuss ein sechstes S-Modul S6 angeordnet, das als Erdseilspitze ausgebildet ist.

Es ist vorgesehen, dass der Mast M mit den drei erläuterten Verbindungs-Modultypen der V-Module Vn und/oder den Einzel-Verbindungszapfen VZ, die eine rahmenlose Verbindung zwischen den S-Modulen S1, S2, S3, S4, S5, S6 herstellen, variabel unter Verwendung der drei Verbindungs-Modultypen der V-Module Vn und/oder der Einzel-Verbindungszapfen VZ modular errichtet werden kann, wie nachfolgend verdeutlicht wird, wobei das Fußhorizontalrahmen-Verbindungs-Modul V101 stets als Mastbasis zum Einsatz kommt, wie nachfolgend erläutert ist.

Als Basis des Mastes M kommt das Fußhorizontalrahmen-Verbindungs-Modul V101 zum Einsatz. Es ist somit ein Basismodul ausgebildet, auf dem der Mast M errichtet werden kann, wie noch näher ausgeführt wird.

### Direkte Verbindung der S-Module Sn untereinander:

Direkte Verbindung bedeutet, dass die S-Module S1, S2, S3, S4, S5, S6 mit Stirn/Stirn-Kontaktflächen aneinander liegen, wie nachfolgend deutlich wird.

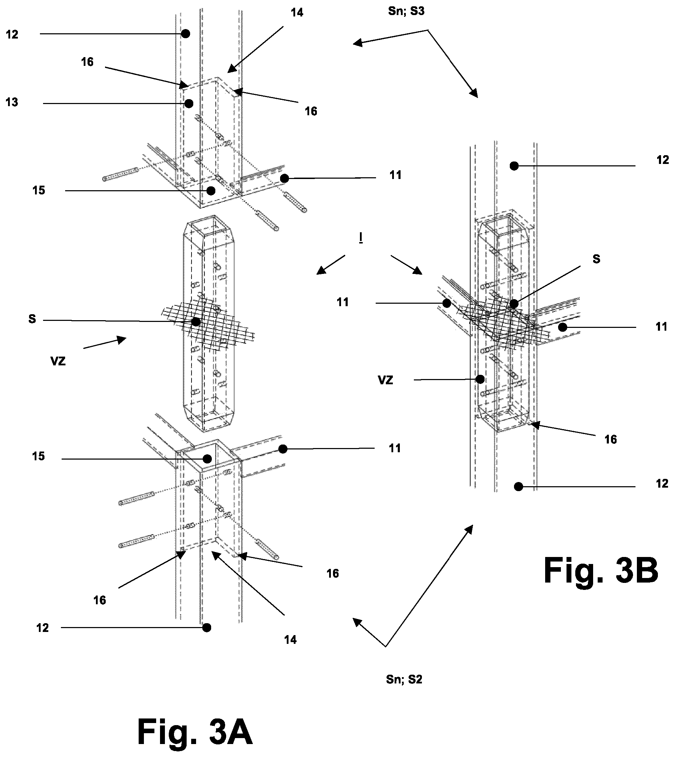

Die Figuren 3A (Explosionsdarstellung vor dem Zusammenbau) und 3B (Zusammenbaudarstellung) zeigen zunächst in einer Zusammenschau eine erfindungsgemäße Verbindungstelle I zwischen zwei S-Modulen Sn auf, die gemäß Figur 1 und Figur 2 beispielhaft zwischen dem zweiten S-Modul S2 und dem dritten S-Modul S3 ausgeführt ist.

Alle S-Module Sn weisen an ihren Enden - analog zu den V-Modulen Vn - eine Horizontalrahmen-Grundstruktur auf.

Die Horizontalrahmen-Grundstruktur der S-Module Sn ist geometrisch eine rechteckige Horizontalrahmen-Grundstruktur aus horizontalen Rahmenprofilen 11, die bevorzugt als L-Profile ausgebildet sind.

Je ein Horizontalrahmen ist jeweils endseitig des jeweiligen S-Moduls Sn ausgebildet.

Zwischen diesen Horizontalrahmen-Grundstrukturen sind vertikale Eckstielprofile 12 angeordnet, die erfindungsgemäß als Schuss-L-Profile ausgebildet sind.

Zwischen den vertikalen Eckstielprofilen 12 ist in üblicher Weise eine stabilisierende Gitterstruktur aus Profilen ausgebildet. Die vertikalen Eckstielprofile 12 der Mastspitze sind in üblicher Weise schräg zueinander ausgerichtet und laufen in einem Punkt zusammen und bilden somit die Spitze des im Ausführungsbeispiel sechsten S-Moduls S6.

Mit anderen Worten, alle S-Module S1, S2, S3, S4, S5, S6 weisen vier vertikale Eckstielprofile auf, wobei im Ausführungsbeispiel durch die Rechteckform des Mastes M mindestens ein endseitig bei S-Modul S6 einen Grundrahmen, ansonsten jeweils endseitig vier horizontale Rahmenprofile, die zwei Grundrahmen bilden, wobei die vier vertikalen Eckstielprofile 12 von den Eckbereichen der vier horizontale Schuss-L-Profile abgehend angeordnet sind.

Mit anderen Worten, in den Eckbereichen der Horizontalrahmen-Grundstruktur, die bevorzugt aus horizontalen L-Profilen ausgebildet sind, sind die vier vertikalen Eckstielprofile 12 orthogonal zu den horizontalen Rahmenprofilen angeordnet.

Mit noch anderen Worten, jedes S-Modul Sn weist vier vertikale Eckstiele aus L-Profilen auf, die jeweils an ihren acht Enden, erfindungsgemäß - einheitlich - wie folgt ausgebildet werden: In den Figuren 3A und 3B sind zwei gegenüberliegende Enden in einem Eckbereich des vertikalen Eckstielprofiles 12 der S-Module S2 und S3 dargestellt, wobei der geschlossene Bereich der vertikalen L-Profile aus der Blattebene herausragend dargestellt sind.

Zwischen den S-Modulen S2 und S3 ist das Verbindungelement in der Art des Einzel-Verbindungszapfens VZ angeordnet.

An den vertikalen Schuss-L-Profilen der Eckstiele werden in den Eckbereichen gegenüberliegend L-Profil-Abschnitte 13 mit einer vorgebbaren Länge angeschweißt, sodass die L-Profil-Abschnitte 13 zusammen mit den vertikalen Schuss-L-Profilen eine rechteckige Aufnahmehülse 14 bilden.

Die L-Maße der L-Profil-Abschnitte 13 korrespondieren mit den Schuss-L-Profilen der Eckstiele, sodass sich die rechteckige Aufnahmehülse 14 bildet.

In den Figuren 3A und 3B ist der geschlossene Bereich der L-Profil-Abschnitte 13 in die Blattebene hineinragend dargestellt. Die L-Profil-Abschnitte 13 sind mit ihren zu den horizontalen Schuss-L-Profilen ausgerichteten Stirnseiten bündig, das heißt, ohne Überstand zu den vertikalen Schuss-L-Profilen und den horizontalen Schuss-L-Profilen angeordnet.

Es wird deutlich, dass die Aufnahmehülsen 14 nun jeweils eine Einstecköffnung 15 mit einer bestimmten vorgebbaren Einstecklänge (in Abhängigkeit der gewählten Länge der L-Profil-Abschnitte 13) und somit vorgegebene Einsteckbereiche ausbilden.

Die Innenkonturen der Aufnahmehülsen 14 entsprechen hinsichtlich ihrer geometrischen Maße im Wesentlichen den geometrischen Maßen der Außenkontur der zwischen den S-Modulen S2 und S3 angeordneten Zapfenabschnitte der Einzel-Verbindungszapfen VZ derart, dass die Zapfenabschnitte der Einzel-Verbindungszapfen VZ mit Spiel, insbesondere geringem Spiel in die Aufnahmehülsen 14 eingesetzt werden können.

Der jeweilige L-Profil-Abschnitt 13 weist - zumindest in dem im Zusammenbauzustand unteren S-Modul Sn, im Ausführungsbeispiel dem zweiten S-Modul S2 auf der den horizontalen Schuss-L-Profilen gegenüberliegenden Seite endseitig mindestens einen nach innen ausgerichteten Anschlag 16 auf, sodass in der jeweiligen Aufnahmehülse 14 beziehungsweise in jeder Aufnahmehülse 14 ein in die Einstecköffnung 15 gesteckter Zapfenabschnitt der Einzel-Verbindungszapfen VZ in dem jeweils unteren S-Modul Sn, im Ausführungsbeispiel gemäß den Figuren 3A und 3B in dem S-Modul S2 eine vorgebbare Position einnimmt.

Bevorzugt sind die Anschläge 16 in allen Einstecköffnungen beidseitig der S-Module Sn angeordnet, sodass die S-Module Sn als obere und untere S-Module Sn im Mast M in jeder Position, verbaut werden können. Die Einzel-Verbindungszapfen VZ finden somit stets einen entsprechenden unteren Anschlag, wenn die Zapfenabschnitte der Einzel-Verbindungszapfen VZ in die Aufnahmehülsen 14 der S-Module Sn eingesteckt werden.

Mindestens ein Anschlag beziehungsweise im Ausführungsbeispiel die Anschläge 16 sind zur Verdeutlichung dieser erfindungsgemäßen Idee deshalb in den Figuren 3A und 3B auch in dem oberen, das heißt, im Ausführungsbeispiel in dem dritten S-Module S3 beziehungsweise dessen L-Profil-Abschnitten 13 angeordnet und eingezeichnet.

In der Verbindungsstelle I, die ausschließlich als Zapfenverbindung ohne Horizontalrahmen ausgebildet ist, liegen zwei S-Module Sn im Zusammenbauzustand mit Stirn/Stirn-Kontaktflächen aneinander an, wobei sich im Zusammenbauzustand der S-Module Sn einheitlich ausgebildete Einsteckbereiche gegenüberliegen, in denen die Zapfenabschnitte der Einzel-Verbindungszapfen VZ beziehungsweise vier Einzel-Verbindungszapfen VZ angeordnet sind.

Mit anderen Worten, von einer orthogonal zur Längserstreckung eines der Einzel-Verbindungszapfen VZ gesehen gedachten Spiegelebene S ausgehend, die durch die in Längserstreckung (die der vertikalen Längserstreckung des Mastes M entspricht) liegenden Mitte des Einzel-Verbindungszapfens VZ gelegt ist, ergeben sich im Zusammenbauzustand der S-Module Sn zu der Spiegelebene S symmetrisch ausgebildete Einsteckbereiche.

Es ist vorgesehen, dass in diesen Einsteckbereichen in der/den Aufnahmehülse/n 14 mehrere Bohrungen, das heißt, Bohrungsöffnungen in vorgebbaren Bohrungsbildern derart ausgebildet sind, dass die ebenfalls in dem/den Zapfenabschnitt/en des/der Verbindungszapfen/s ausgebildeten Bohrungsöffnungen im Zusammenbauzustand der S-Module Sn unter Verwendung des derart ausgebildeten Einzel-Verbindungszapfens VZ eine korrespondierende Position einnehmen.

Es ist also vorgesehen, dass die vorgegebenen Bohrungsbilder der Zapfenabschnitte des Einzel-Verbindungszapfens VZ und der Aufnahmehülse 14, wobei in den Figuren 3A und 3B nur einige Bohrungen beispielhaft gezeigt sind, derart gewählt sind, dass der Werker den Einzel-Verbindungszapfen VZ in jeder Position in die Aufnahmehülsen 14 stecken kann, wobei in der Endposition des Einzel-Verbindungszapfens VZ im Zusammenbauzustand stets eine korrespondierende fluchtende Position der Bohrungen in den Zapfenabschnitten des Einzel-Verbindungszapfens VZ und den Bohrungen der Aufnahmehülse 14 erreicht wird.

Das heißt, die Bohrbilder in den jeweiligen Aufnahmehülsen 14 und den Zapfenabschnitten des jeweiligen Einzel-Verbindungszapfens VZ sind so gewählt, dass die Bohrungsöffnungen im Zusammenbauzustand positionsgetreu derart angeordnet sind, dass sich im Zusammenbauzustand "automatisch", Durchstecköffnungen ergeben, in die ein Sicherungselement (gemäß einer der Befestigungs-Ausführungsvarianten) gesteckt werden kann, dass die Verbindung zwischen dem Verbindungszapfen und den beiden zu verbindenden S-Modulen Sn herstellt.

Mit anderen Worten, der Werker kann den Einzel-Verbindungszapfen VZ um seine Längsachse um 180° drehen und in die Einstecköffnung 15 einstecken oder unter Drehung um die Längsachse von 90° bei gleichzeitiger Drehung um eine der Querachsen um 180° und wahlweise mit der einen oder anderen Stirnseite voran in die Einstecköffnung 15 bis zum jeweiligen Anschlag 16 einstecken, wobei im Zusammenbauzustand die fluchtende Position der Bohrungen in der Aufnahmehülse 14 und dem Einzel-Verbindungszapfen VZ nicht verloren geht beziehungsweise stets erreicht wird.

Die Figuren 3A und 3B verdeutlichen im Übrigen, dass die Zapfenabschnitte der Einzel-Verbindungszapfen VZ bevorzugt in Bezug auf die Längsachse des Einzel-Verbindungszapfens VZ beidseitig angefast sind, damit der Einzel-Verbindungszapfens VZ in vereinfachter Weise in die jeweilige Einstecköffnung 15 eingesteckt werden kann.

Die Montage ist dadurch besonders sicher und einfach durchführbar.

In einer ersten Befestigungs-Ausführungsvariante ist vorgesehen, dass durch die Bohrungsöffnungen Bolzen gesteckt werden, die auf der dem Bolzenkopf gegenüberliegenden Seite mit Sicherungsstiften gesichert werden.

In einer zweiten Befestigungs-Ausführungsvariante werden hochfeste Stahlbauschrauben verwendet, die durch die Bohrungsöffnungen gesteckt werden, die auf der dem Schraubenkopf gegenüberliegenden Seite mit Muttern oder Sicherungsstiften gesichert werden.

Insbesondere, im Falle eines Leitungsschadens ist es wichtig, dass beispielsweise Ersatzmaste in der Art des erfindungsgemäßen Mastes M besonderes schnell errichtet werden können.

Zu diesem Zweck werden die Verbindungen der S-Module Sn untereinander mittels der Verbindungszapfen VZ oder mittels der V-Module Vn miteinander verbunden, die nach Herstellung des Zusammenbauzustands mit einer der zuvor angegeben Befestigungs-Ausführungsvariante gesichert werden.

Es ist vorgesehen, dass alle Verbindungen der S-Module Sn untereinander konstruktiv identisch ausgeführt werden, sodass stets das zuvor erläuterte Prinzip "Aufnahmehülse/Verbindungszapfen" beibehalten wird.

Alle Mastbauteile des Mastes M lassen sich dadurch in unterschiedlichen Ausrichtungen montieren (oben und unten, um die Achse gedreht usw.), wodurch eine fehlerhafte Montage vermieden wird. Nur das Fußhorizontalrahmen-V-Modul V101 und die Mastspitze, das S-Modul S6 könne ausschließlich um ihre Längsachse frei gedreht werden. Für den Zusammenbau kann ihre Oberseite nicht als Unterseite verwendet werden.

Im Zusammenhang mit der Verbindungsstelle I wurden die vorteilhaften Ausgestaltungen bereits erläutert, wobei nachfolgend auf die weiteren Arten der Verbindungsstellen II und III eingegangen wird, die sich prinzipiell nicht von der Art der Verbindungsstelle I unterscheiden, jedoch aufgrund der spezifischen Lastanforderungen an das Fußhorizontalrahmen-V-Modul V101 (erster Verbindungs-Modultyp), das Horizontalrahmen-V-Modul V102, V103 (zweiter Verbindungs-Modultyp) und das Horizontalrahmen-V-Modul V104, V105 (dritter Verbindungs-Modultyp) auf andere Art und Weise dem einheitlichen Prinzip der Verbindung der S-Module Sn untereinander folgen beziehungsweise das Prinzip auf andere Art und Weise verwirklichen.

### Indirekte Verbindung der S-Module Sn mit einem zwischen den S-Modulen Sn integrierten Horizontalrahmen-Verbindungs-Modul V104, V105:

Indirekte Verbindung bedeutet, dass die S-Module S1, S2, S3, S4, S5, S6 nicht mit Stirn/Stirn-Kontaktflächen aneinander liegen.

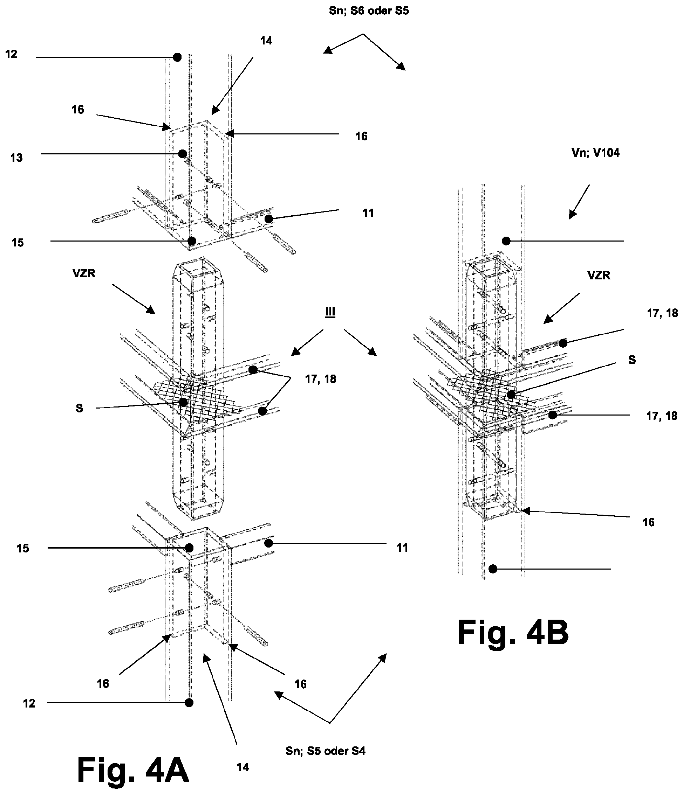

Die Figuren 4A (Explosionsdarstellung vor dem Zusammenbau) und 4B (Zusammenbaudarstellung) zeigen in einer Zusammenschau eine erfindungsgemäße vierte Verbindungstelle III zwischen zwei S-Modulen Sn auf, die gemäß Figur 1 und Figur 2 beispielhaft zwischen dem S-Modul S4 und S5 und S5 und S6 ausgeführt ist, wobei für gleiche Mastbauteile gleiche Bezugszeichen verwendet werden.

Alle S-Module Sn weisen - wie erläutert - geometrisch eine rechteckige Horizontalrahmen-Grundstruktur aus horizontalen Schussprofilen 11 auf, die bevorzugt als L-Profile ausgebildet sind. Von diesen Horizontalrahmen der Grundstruktur ausgehend, sind die als Schuss-L-Profile ausgebildeten vertikalen Eckstielprofile 12 angeordnet. Die S-Module S4, S5, S6 sind in der jeweiligen Verbindungsstelle III in dergleichen Verbindungsart miteinander verbunden.

Der Unterschied zu Verbindungsstelle I besteht darin, dass der Verbindungszapfen VZ nicht mehr als Einzel-Verbindungszapfen VZ ausgebildet ist, sondern an den vier Verbindungszapfen VZ umlaufend horizontale Rahmenprofile 17, die meist als U-Profile ausgebildet, fest angeordnet, insbesondere angeschweißt sind, sodass rahmenfeste Verbindungszapfen VZR mit von den horizontalen Rahmenprofilen 17 beidseitig - in Längserstreckung des zusammengebauten Mastes M gesehen - abkragenden Zapfenabschnitten ausgebildet sind.

Vier horizontale Rahmenprofile 17 bilden einen umlaufenden Horizontalrahmen 18. Im Ausführungsbeispiel sind zwei Horizontalrahmen 18 mit vier horizontalen Rahmenprofilen 17 angedeutet, die in einem vorgebbaren vertikalen Abstand (in Längserstreckung des errichteten Mastes M gesehen) zueinander ausgebildet sind.

Mastes M gesehen) zueinander ausgebildet sind.

Mit anderen Worten, je vier horizontale Rahmenprofile 17 bilden zwei umlaufende Horizontalrahmen 18.

Die Anzahl n der Horizontalrahmen 18 kann variabel frei gewählt werden. Es kann somit mindestens ein Horizontalrahmen 18 oder es können mehrere Horizontalrahmen 18, wie dargestellt, ausgebildet werden.

Im Ausführungsbeispiel sind die zwei Horizontalrahmen 18 ausgebildet, zwischen denen die bereits beschriebene Spiegelebene S liegt. An mindestens einem Horizontalrahmen 18 sind im Ausführungsbeispiel gegenüberliegend zwei horizontal auskragende Tragarme 19 (vergleiche Figuren 1 und 2) angeordnet. Die Tragarme 19 dienen der vom Mast M beabstandeten Befestigung der Freileitungen.

Durch diese im Detail ausgeführte Ausgestaltung sind die sogenannten Horizontalrahmen-Verbindungs-Module V104, V105, kurz die Horizontalrahmen-V-Module V104, V105 mit den rahmenseitig angebrachten Tragarmen 19 gemäß den Figuren 1 und 2 ausgebildet.

Es versteht sich, dass der/die rahmenfesten Verbindungszapfen VZR - wie dargestellt - durch die Anordnung mindestens eines oder mehrerer Horizontalrahmen 18 im Vergleich zu der Verbindungsstelle I länger ausgebildet ist/sind.

Es ist stets vorgesehen, dass das Bohrbild der Zapfenabschnitte der rahmenfesten Verbindungszapfen VZR oberhalb und unterhalb der gedachten beschriebenen Spiegelebene S derart ausgebildet ist, dass sich die beschriebenen Symmetrieverhältnisse bezüglich des Bohrbildes der Aufnahmehülsen 14 in den angrenzenden S-Modulen Sn entsprechend einstellen.

Durch diese Ausgestaltung sind dann die Verbindungen in der Verbindungsstelle III der dritten Art analog zu der ersten Verbindungsstelle I ausführbar, indem die jeweiligen Enden des rahmenfesten Verbindungszapfens VZR beziehungsweise der vier rahmenfesten Verbindungszapfen VZR bei der Montage des Mastes M gemäß dem oben beschriebenen Prinzip "Aufnahmehülse/Verbindungszapfen" verwechselungsfrei in die dafür in den S-Module Sn vorgesehenen Aufnahmehülsen 14 bis zum Anschlag 16 eingesteckt werden können.

Es versteht sich, dass die Innenkonturen der Aufnahmehülsen 14 hinsichtlich ihrer geometrischen Maße im Wesentlichen den geometrischen Maßen der Außenkontur der zwischen den angrenzenden S-Modulen Sn angeordneten Zapfenabschnitte der rahmenfesten Verbindungszapfens VZR derart, dass die Zapfenabschnitte der rahmenfesten Verbindungszapfen VZ mit Spiel, insbesondere geringem Spiel in die Aufnahmehülsen 14 eingesetzt werden können.

### Indirekte Verbindung der S-Module Sn mit einem zwischen den S-Modulen integrierten Horizontalrahmen-Verbindungs-Modul V102, V103:

In den Figuren 1 und 2 ist die Verbindungsstelle III mittels den Horizontalrahmen-VerbindungsModulen V102, V103 nur prinzipiell gezeigt. Auf eine Detaildarstellung der Verbindungsstelle III zwischen den Horizontalrahmen-Verbindungs-Modul V102, V103 wird verzichtet, da die Verbindung zwischen den Horizontalrahmen-Verbindungs-Modul V102, V103 nur durch die Beschreibung ebenfalls verdeutlicht werden kann.

Die Verbindungsstelle III der dritten Art ist zwischen zwei S-Modulen Sn angeordnet, die gemäß Figur 1 und Figur 2 beispielhaft zwischen dem S-Modul S1 und S2 sowie S3 und S4 ausgeführt ist, wobei für gleiche Mastbauteile gleiche Bezugszeichen verwendet werden.

Alle S-Module Sn weisen - wie erläutert - geometrisch die rechteckige Horizontalrahmen-Grundstruktur aus horizontalen Schussprofilen 11 auf, die bevorzugt als L-Profile ausgebildet sind. Von dieser Horizontalrahmen-Grundstruktur ausgehend, sind die als Schuss-L-Profile ausgebildeten Eckstielprofile 12 angeordnet. Die S-Module S1, S2, S3, S4, insbesondere ihre Aufnahmehülsen 14 sind analog zu den bisher beschriebenen S-Modulen Sn ausgebildet.

Analog zu der erläuterten Verbindungsstelle III sind rahmenfeste Verbindungszapfen VZR ausgebildet, das heißt, an den vier Verbindungszapfens sind umlaufend horizontale Rahmenprofile 17, die meist als U-Profile ausgebildet sind, fest angeordnet, insbesondere angeschweißt. Vier horizontale Rahmenprofile 17 bilden somit wiederum einen umlaufenden Horizontalrahmen 18.

Die Anzahl n der Horizontalrahmen 18 könnte auch hier frei gewählt werden, wenn mehrere Horizontalrahmen 18 benötigt werden. In der Ausgestaltung ist jedoch ein einziger Horizontalrahmen 18 ausgebildet und ausreichend.

Analog zu der bereits beschriebenen dritten Verbindungsstelle III liegt die bereits beschriebene Spiegelebene S hier nicht zwischen den Horizontalrahmen, sondern in der Ebene des einen Horizontalrahmens.

An mindestens einem Horizontalrahmen 18 sind im Unterschied zu der Verbindungsstelle III zwischen den Horizontalrahmen-Verbindungs-Modul V104, V105 an jedem der horizontalen Rahmenprofile 17 als Befestigungsglieder Flanschaugen 20 (vergleiche Figuren 1 und 2) angeordnet.

Die Flanschaugen 20 des Horizontalrahmen-Verbindungs-Moduls V103 dienen in dieser ansonsten gleichartig zu dem Horizontalrahmen-Verbindungs-Modul V104, V105 ausgebildeten Verbindungsstelle III der Befestigung von Ankerseilen 21, wie in den Figur 1 und 2 angedeutet oder sie dienen bei dem Horizontalrahmen-Verbindungs-Modul V102 der Befestigungs von Stützelementen der Stützstruktur 1, worauf noch eingegangen wird.

Durch diese im Detail andere Ausgestaltung der Horizontalrahmen-Verbindungs-Module V102, V103 gegenüber den Horizontalrahmen-Verbindungs-Module V104, V105 gemäß den Figuren 1 und 2 unterscheiden sich die Verbindungsstellen III noch darin, dass entweder Tragarme 19 oder Flanschaugen 20 an dem oder einem Rahmen der Horizontalrahmen-Verbindungs-Module V102, V103 oder V104, V105 angeordnet sind.

Es versteht sich, dass der/die rahmenfeste/n Verbindungszapfen VZR - wie dargestellt - durch die Anordnung des einen einzigen Horizontalrahmen 18 im Vergleich zu der Verbindungsstelle III mit zwei in Längserstreckung des Mastes M gesehen zwei Horizontalrahmen 18 kürzer ausgebildet ist.

Wesentlich ist, dass die rahmenfesten Verbindungszapfen VZR oberhalb und unterhalb der gedachten beschriebenen Spiegelebene S derart ausgebildet ist, dass sich die beschriebenen Symmetrieverhältnisse bezüglich der angrenzenden S-Module Sn wieder entsprechend einstellen.

Durch diese Ausgestaltung sind dann die Verbindungen in den Verbindungsstellen III der dritten Art analog zu der ersten Verbindungsstelle I ausführbar, indem die jeweiligen Enden des Einzel-Verbindungszapfens VZ oder der rahmenfesten Verbindungszapfen VZR bei der Montage des Mastes M gemäß dem oben beschriebenen Prinzip "Aufnahmehülse/Verbindungszapfen" verwechselungsfrei in die dafür in den S-Modulen Sn vorgesehenen Aufnahmehülsen 14 bis zum Anschlag 16 eingesteckt werden können.

### Direkte Verbindung des ersten S-Moduls S1 mit dem Fußhorizontalrahmen-V-Modul V101:

In den Figuren 1 und 2 ist noch eine zweite Verbindungsstelle II prinzipiell, jedoch in den Figuren nicht detailliert gezeigt.

Die zweite Verbindungsstelle II ist zwischen dem Fußhorizontalrahmen-V-Modul V101 und dem ersten S-Modul S1 angeordnet. Für gleiche Mastbauteile werden gleiche Bezugszeichen verwendet.

Das S-Modul S1, insbesondere die Aufnahmehülsen 14 des ersten S-Moduls S1 sind, wie mehrfach erläutert, analog zu den S-Modulen S2, S3, S4, S5, S6 ausgebildet.

Analog zu den anderen Verbindungsstellen sind an den vier Verbindungszapfen umlaufend horizontale Rahmenprofile 17, die meist als U-Profile ausgebildet sind, fest angeordnet, insbesondere angeschweißt, sodass rahmenfesten Verbindungszapfen VZR ausgebildet sind.

Die vier umlaufenden horizontalen Rahmenprofile 17 bilden somit einen Horizontalrahmen 18 als Fußhorizontalrahmen-Verbindungs-Modul oder Horizontalrahmen-Verbindungs-Modul des Mastes M.

Bei dem umlaufenden Rahmenprofilen 17 werden jedoch die rahmenfesten Verbindungszapfen VZR in den Ecken des Fußhorizontalrahmen-Verbindungsmoduls V101 derart mit dem Horizontalrahmen 18 verbunden, dass die rahmenfesten Verbindungszapfen VZR nur einseitig in Richtung des untersten ersten S-Modul S1 von dem Horizontalrahmen 18 (im Zusammenbauzustand nach oben) abkragen, denn an dem Fußhorizontalrahmen-Verbindungs-Modul V101 wird beim Errichten des Mastes M nur das erste S-Modul S1 angeordnet.

An dem Horizontalrahmen 18 sind jedoch analog zu den Horizontalrahmen-VerbindungsModulen V102, V103 an jedem der horizontalen Rahmenprofile 17 Befestigungsglieder - bevorzugt wiederum Flanschaugen 20 - (vergleiche Figuren 1 und 2) angeordnet beziehungsweise ausgebildet.

Diese Flanschaugen 20 dienen der Befestigung von Stützelementen, wie in den Figuren 1 und 2 angedeutet ist, worauf noch eingegangen wird.

Durch diese im Detail ausgeführte Ausgestaltung ist somit das Fußhorizontalrahmen-Verbindungs-Modul V101 gemäß den Figuren 1 und 2 ausgebildet.

Es versteht sich, dass die rahmenfeste Verbindungszapfen VZR - wie dargestellt - zur Herstellung der Verbindungsstelle II im Vergleich zu den Einzel-Verbindungszapfens VZ in der Verbindungsstelle I nur halb so lang ausgebildet sind.

Wesentlich ist, dass sich die beschriebenen Symmetrieverhältnisse bezüglich des angrenzenden S-Moduls S1 entsprechend einstellt.

Durch diese Ausgestaltung ist die Verbindung in der Verbindungsstelle II der zweiten Art analog zu den anderen Verbindungstellen I und III ausführbar, indem die jeweiligen oberen Enden des beziehungsweise der vier rahmenfesten Verbindungszapfen VZR bei der Montage des Mastes M gemäß dem oben beschriebenen Prinzip "Aufnahmehülse/Verbindungszapfen" verwechselungsfrei in die dafür in dem ersten S-Modul S1 vorgesehenen Aufnahmehülsen 14 gesteckt werden können. Die Innenkonturen der Aufnahmehülsen 14 entsprechenden wiederum hinsichtlich ihrer geometrischen Maße im Wesentlichen den geometrischen Maßen der Außenkontur der zwischen den angrenzenden S-Modulen Sn angeordneten Zapfenabschnitte der rahmenfesten Verbindungszapfens VZR derart, dass die Zapfenabschnitte der rahmenfesten Verbindungszapfen VZ mit Spiel, insbesondere geringem Spiel in die Aufnahmehülsen 14 eingesetzt werden können.

Es wird deutlich, dass sich aus der Kombination einer variablen Anzahl n gleich langer oder unterschiedlich langer S-Module Sn unterschiedliche Masthöhen der jeweils benötigten Masten M aufbauen beziehungsweise montieren und demontieren lassen.

Die Mast-Module Sn an sich und die Verbindungselement-Module Vn unterscheiden sich, wie zuvor erläutert, jedoch wurde erfindungsgemäß gefunden, dass es möglich ist, gemäß der Aufgabe der Erfindung eine kostengünstigere, stabilere, sicherere und einfachere, das heißt, schnellere Montage beziehungsweise Demontage zu ermöglichen.

Der beispielhaft dargestellte Mast M umfasst, wie vorne erläutert ist, die Stützstruktur 1.

### Die Stützstruktur:

Das Fußhorizontalrahmen-V-Modul V101 mit dem ersten S-Modul S1 lässt sich in vorteilhafter Weise durch ein sogenanntes mobiles Gestänge an einen Geländeverlauf anpassen, um die erforderlichen Vorarbeiten zur Errichtung des Mastes M in sich hinsichtlich der Höhe unterscheidenden Geländeprofilen zu reduzieren.

In vorteilhafter Weise ist ein Planum der Aufstellfläche, damit auch in Geländen mit sich hinsichtlich der Geländehöhen unterscheidenden Geländeprofilen nicht erforderlich.

Zu diesem Zweck sind die bereits erwähnten Stützstreben 1A, 1B, wie folgt ausgebildet:
Die ersten Stützstreben 1A und die zweiten Stützstreben 1B sind bevorzugt als geschweißtes Gitterfachwerk leiterartig ausgebildet.

Je zwei Grundholme einer Stützstrebe 1A, 1B sind mit einem Gitterfachwerk stabilisierend ausgebildet, das zwischen den Grundholmen der Stützstreben 1A, 1B ausgebildet ist.

Die zweiten Stützstreben 1B sind teleskopierbar, das heißt, stufenlos längen- und somit gegenüber dem Gelände höhenverstellbar, wie noch deutlich wird.

Die Teilstreben der zweiten Stützstreben 1B greifen ineinander/aneinander und weisen in beiden Teilstreben ein vorgebbares beziehungsweise vorgegebenes Bohrungsraster auf.

Bevorzugt sind die ersten Stützstreben 1B als L-Profile ausgebildet. Bevorzugt sind die zweiten Stützstreben 1B ebenfalls als L-Profile ausgebildet. Die Länge der zweiten Stützstreben 1B ist somit frei einstellbar.

Vorgesehen ist, dass die ersten Stützstreben 1A und die zweiten Stützstreben 1B ihren auflagerseitigen Enden (Leiterenden) an Auflagern, insbesondere an einem Auflageranschlagmittel der Auflager befestigt werden, wobei die teleskopierbaren zweiten Stützstreben 1B entsprechend hinsichtlich ihrer Länge an die Position des Auflageranschlagmittels der Auflager angepasst sind beziehungsweise angepasst werden können.

Bohrungen jeweils endseitig der bevorzugt als L-Profile ausgebildeten Grundholme der ersten Stützstreben 1A ermöglichen an diesem Ende der ersten Stützstreben 1A eine Verbindung der ersten Stützstreben 1A an den entsprechend beabstandeten Flanschaugen 20 des Fußhorizontalrahmen-V-Moduls V101.

Bohrungen jeweils anderenends der Grundholme der ersten Stützstreben 1A ermöglichen an diesem Ende der ersten Stützstreben 1A eine Verbindung der ersten Stützstreben 1A an einem Auflager, das ebenfalls mindestens ein Flanschauge 20 oder entsprechend dem Abstand der Grundholme der Leiterstruktur Flanschaugen 20 aufweist.

Bohrungen jeweils endseitig der bevorzugt als L-Profile ausgebildeten Grundholme der zweiten Stützstreben 1B ermöglichen an einem Ende der Stützstreben 1B eine Verbindung der zweiten Stützstreben 1B an beabstandeten Flanschaugen 20 des Horizontalrahmen-Verbindungs-Moduls V102.

Bohrungen jeweils anderenends der Grundholme der zweiten Stützstreben 1B ermöglichen an diesem Ende der zweiten Stützstreben 1B eine Verbindung der ersten Stützstreben 1A an einem Auflager, das ebenfalls mindestens ein Flanschauge 20 oder entsprechend dem Abstand der Grundholme Flanschaugen 20 aufweist.

Die endseitigen Bohrungen an beiden Enden der Grundholme der Stützstreben 1A und 1B dienen dazu gemäß einer der Befestigungs-Ausführungsvarianten, insbesondere ein Sicherungselement, insbesondere einen Bolzen mit Sicherungsstift durch die Bohrungen der Stützstreben 1A und 1B und durch das mindestens eine Flanschauge 20 des Auflagers zu schieben und mit einem Sicherungselement, insbesondere Sicherungsstift (nicht dargestellt) zu sichern.

Zum Mast M ausgerichtet, das heißt am mastseitigen Ende, weisen die zweiten Stützstreben 1B somit endseitig Bohrungen auf, die im Zusammenbauzustand an den jeweiligen Flanschaugen 20 des Horizontalrahmen-Verbindungs-Moduls V102 mit den Öffnungen der Flanschaugen 20 hinsichtlich der Lage und dem Bohrungsdurchmessern korrespondierend angelegt werden und mittels einer der Befestigungs-Ausführungsvarianten an dem zweiten Horizontalrahmen-Verbindungs-Modul V102 gesichert werden, das mit dem ersten S-Modul S1 und dem zweiten S-Modul S2 in Verbindung steht.

Zum Mast M ausgerichtet, das heißt am mastseitigen Ende, weisen die ersten Stützstreben 1A somit endseitig Bohrungen auf, die im Zusammenbauzustand an den jeweiligen Flanschaugen 20 des Fußhorizontalrahmen-V-Moduls V101 mit den Öffnungen der Flanschaugen 20 hinsichtlich der Lage und dem Bohrungsdurchmessern korrespondierend angelegt werden und mittels einer der Befestigungs-Ausführungsvarianten mit dem Fußhorizontalrahmen-V-Moduls V101 in Verbindung gebracht werden.

Die endseitigen Bohrungen an beiden Enden der Grundholme der Stützstreben 1A und 1B dienen dazu gemäß einer der Befestigungs-Ausführungsvarianten, insbesondere ein Sicherungselement, insbesondere einen Bolzen mit Sicherungsstift durch die Bohrungen der Stützstreben 1A und 1B durch das mindestens eine Flanschauge 20 des Auflagers zu schieben und mit dem Sicherungsstift zu sichern.

Mit anderen Worten, als Befestigung kommt hier ebenfalls bevorzugt eine der beiden erläuterten Befestigungs-Ausführungsvarianten zum Einsatz. Die Befestigungs-Ausführungsvarianten können in vorteilhafter Weise innerhalb eines Mastaufbaus auch kombiniert eingesetzt werden, da sich für bestimmte Verbindungen die eine oder andere der Befestigungs-Ausführungsvarianten hinsichtlich der aufzunehmenden Kräfte oder der Montagefreundlichkeit besser eignet.

Wesentlich ist, dass sich für die Errichtung der Stützstruktur am Mast M keine anderen Befestigungsvarianten benötigt werden. Mit anderen Worten zur Errichtung des Mastes M an sich und der Stützstruktur 1 wird ausschließlich eine der Befestigungsvarianten oder eine Kombination der Befestigungsvarianten eingesetzt. Die Vielfalt der Befestigungselemente ist dadurch reduziert und der Errichtungs- und Materialaufwand wird in vorteilhafter Weise erheblich reduziert beziehungsweise gering gehalten.

Es sind somit vier erste Stützstreben 1A und vier zweite Stützstreben 1B angeordnet, die bevorzugt mit je einem auf einer Achse liegenden Doppelgelenk in den Bereichen der Flanschaugen 20 des Fußhorizontalrahmen-V-Moduls V101 beziehungsweise des Horizontalrahmen-Verbindungs-Modul V102 mastseitig gelenkig angeordnet sind, wobei die vier ersten Stützstreben 1A und die vier zweiten Stützstreben 1B auflagerseitig auf die gleiche Art und Weise, insbesondere hinsichtlich Position der Enden gemeinsam an den vier Auflagern gelenkig angeordnet sind.

Die ersten Stützstreben 1A sind, bevor sie im Zusammenbauzustand an den Auflagern befestigt werden beziehungsweise befestigt sind, in vorteilhafter Weise über die mastseitigen Gelenke gegenüber einer gedachten horizontalen Geländeebene nach oben in Mastrichtung des Mastes 100 und nach unten entgegen der Mastrichtung des Mastes 100 verkippbar/verschwenkbar und somit an das sich von der gedachten horizontalen Ebene abweichende Gelände anpassbar.

Die zweiten Stützstreben 1B sind, bevor sie im Zusammenbauzustand an den Auflagern befestigt werden beziehungsweise befestigt sind, über die mastseitigen Gelenke gegenüber einer gedachten horizontalen Geländeebene ebenfalls nach oben in Mastrichtung des Mastes 100 und nach unten entgegen der Mastrichtung des Mastes 100 verkippbar/verschwenkbar und somit mit ihrer erläuterten teleskopartigen Längenanpassung an das sich von der gedachten horizontalen Ebene abweichende Gelände anpassbar.

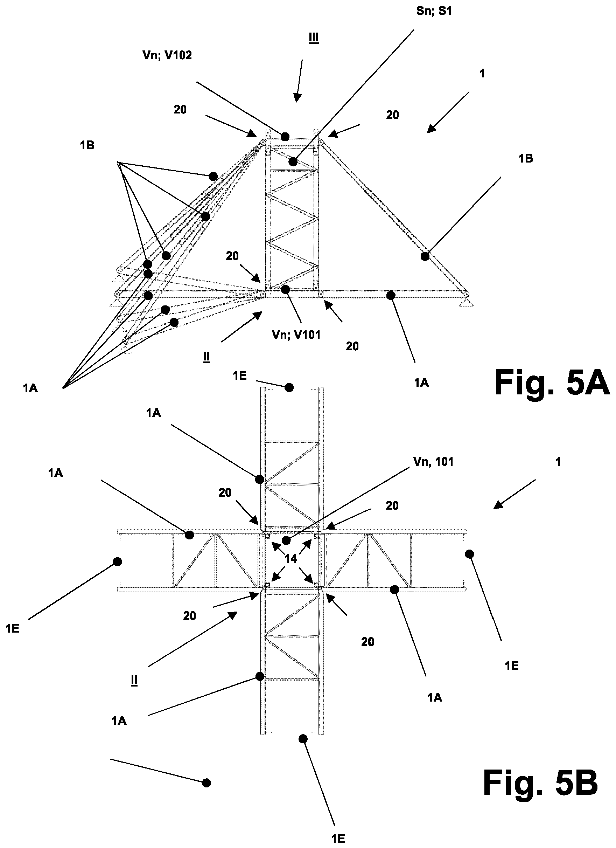

Die Auflager werden bei dem meist vorliegenden Bedarf wie in Figur 5A (links) gezeigt in Abhängigkeit des Geländeprofils gegenüber der gedachten horizontalen Geländeebene in unterschiedliche Höhen angeordnet.

Jedes Auflager weist ein Auflageranschlagmittel (vergleiche die Figuren 1 und 2) bevorzugt in der Art eines Anschlagsteges 1C auf.

In bevorzugter Ausgestaltung der Erfindung ist das Auflager ein Modul in der Art eines Auflastrahmens 1D ausgebildet und sitzt auf einem geländeseitig errichteten Fundament 1E gemäß Ausführungsbeispiel sind vier Fundamente 1E angeordnet. Der jeweilige Auflastrahmen 1D ist in einer Ausgestaltung fest mit den Fundamenten 1E verbunden. Die Fundamente 1E können in dergleichen Höhenlage oder einer anderen Höhenlage im Gelände angeordnet sein.

Die Gründung des mobilen Freileitungsgestänges mittels Fundamenten 1E, das heißt der Stützstruktur 1 beziehungsweise letztlich des Mastes M, besteht somit in dieser bevorzugten Ausgestaltung aus herkömmlichen aber gleichartig aufgebauten Fundamenten 1E, die im Erdreich verankert werden, sobald die ersten Stützstreben 1A mit dem Fußhorizontalrahmen-V-Moduls V101 und dem Auflastrahmen 1D verbunden sind.

Die Anschlagstege 1C des Auflastrahmens 1D weisen die zueinander beabstandeten Flanschaugen 20 auf, an denen die Stützstreben 1A und 1B - wie erläutert - auflagerseitig fixiert in der einen oder anderen Befestigungs-Ausführungsvariante fixiert werden beziehungsweise im Zusammenbauzustand fixiert sind.

Die Fundamente 1E werden in anderen bevorzugten Ausgestaltungen wie folgt errichtet:
Die Ausgestaltung des Auflagers als modularer Auflastrahmen 1D ist von Vorteil, da vorgesehen sein kann, auf ein Fundament 1E gänzlich zu verzichten.

Es werden in einer bevorzugten Ausgestaltung (nicht dargestellt) Auflastgewichte in den Auflastrahmen 1D eingebracht, die als Fundament fungieren, das heißt Druck-, Zug- und Horizontalkräfte aufnehmen.

In einer anderen bevorzugten Ausgestaltung ist ein Auflastrahmenmodul derart ausgestaltet, dass in den Auflastrahmen 1D Stahlprofile eingebracht, die mindestens eine auflastrahmenfeste Aufnahme aufweisen, in der mindestens ein oder bei mehreren Aufnahmen beispielsweise drei gegründete Kleinverpresspfähle je Auflager angeordnet und befestigt sind.

Alternativ können in einer anderen Ausgestaltung Schraubfundamente realisiert werden, die ebenfalls unter Weglassung eines herkömmlichen Fundamentes als Fundament fungieren. Das Auflastrahmenmodul ist hier derart ausgestaltet, dass in den Auflastrahmen 1D mindestens eine auflastrahmenfeste Aufnahme angeordnet ist, in der mindestens ein oder bei mehreren Aufnahmen beispielsweise drei gegründete Fundamentschrauben je Auflager angeordnet und befestigt sind.

Die unterschiedlichen Auflastrahmenmodule oder Gründungstypen können dabei auch an einem Mast M in vorteilhafter Weise kombiniert eingesetzt werden.

Zusätzlich ist eine Abspannung des mobilen Mastes mittels Ankerseilen 21 möglich, wodurch der auflastseitige Gründungsaufwand im Bereich der Auflastrahmen 1D reduziert werden kann.

Die Ankerseile 21, im Ausführungsbeispiel beispielsweise vier Ankerseile 21, können (vergleiche Figuren 1 und 2) an dafür vorgesehenen Flanschaugen 20 an dem dafür vorgesehenen und ausgebildeten Horizontalrahmen-Verbindungs-Modul V103 gemäß der dritten Verbindungsstelle III befestigt und geländeseitig gegründet werden.

### Bezugszeichenliste

- M: Mast
- Sn: Mastschuss-Module (n = Anzahl = n-tes)
- S1: erstes Mastschuss-Modul
- S2: zweites Mastschuss-Modul
- S3: drittes Mastschuss-Modul
- S4: viertes Mastschuss-Modul
- S5: fünftes Mastschuss-Modul
- S6: sechstes Mastschuss-Modul
- VZ: Verbindungszapfen (rahmenlos)
- VZR: Verbindungszapfen (rahmenfest)
- Vn: Verbindungs-Modul (n = Anzahl = n-tes) Erster Typ eines Verbindungs-Moduls Vn:
- V101: erstes Fußhorizontalrahmen-Verbindungs-Modul mit Flanschaugen 20 Zweiter Typ eines Verbindungs-Moduls Vn:
- V102: zweites Horizontalrahmen-Verbindungs-Modul mit Flanschaugen 20
- V103: drittes Horizontalrahmen-Verbindungs-Modul mit Flanschaugen 20 Dritter Typ eines Verbindungs-Moduls Vn:
- V104: viertes Horizontalrahmen-Verbindungs-Modul mit Tragarmen 19
- V105: fünftes Horizontalrahmen-Verbindungs-Modul mit Tragarmen 19
- I: Verbindungsstelle (erste Art) zwischen zwei Mastschuss-Modulen Sn und Verbindungszapfen VZR
- II: Verbindungsstelle (zweite Art) zwischen einem ersten Mastschuss-Modul S1und einem Fußhorizontalrahmen-Verbindungs-Modul V101
- III: Verbindungsstelle (dritte Art) zwischen zwei Mastschuss-Modulen Sn und einem Horizontalrahmen-Verbindungs-Modul V102, V103 oder V104, V105
- 11: horizontale Rahmenprofile
- 12: Eckstielprofile
- 13: L-Profil-Abschnitte
- 14: Aufnahmehülse
- 15: Einstecköffnung
- 16: Anschlag/Anschläge
- 17: horizontale Rahmenprofile
- 18: Horizontalrahmen
- 19: Tragarme
- 20: Flanschauge/n
- 21: Ankerseil
- 1: Stützstruktur
- 1A: erste Stützstreben
- 1B: zweiten Stützstreben (teleskopierbar)
- 1C: Anschlagsteg
- 1D: Auflastrahmen
- 1E: Fundament
- S: Spiegelebene

## Patentansprüche

1. Mast (M) aufweisend eine Stützstruktur (1) und mindestens zwei vormontierte Mastschuss-Module (Sn), die im Zusammenbauzustand einen Mastschaft bilden, wobei
- den mindestens zwei Mastschuss-Modulen (Sn) im Zusammenbauzustand mindestens zwei vormontierte Verbindungs-Module (Vn) zugeordnet sind,
**dadurch gekennzeichnet, dass**
- ein erstes Mastschuss-Modul (S1) auf einem bodenseitig angeordneten Fußhorizontalrahmen-Verbindungs-Modul (V101) eines ersten Verbindungs-Modultyps an einem Aufstellort angeordnet und mit der Stützstruktur (1) verbunden ist, wobei
- das erste Mastschuss-Modul (S1) und mindestens ein weiteres Mastschuss-Modul (Sn) über ein Horizontalrahmen-Verbindungsmodul (V102, V103) eines zweiten Verbindungs-Modultyps mit der Stützstruktur (1) miteinander verbunden sind, wobei die Verbindungs-Module (Vn) des ersten und zweiten Verbindungs-Modultyps jeweils Befestigungsglieder zur Befestigung von Stützelementen der Stützstruktur (1) aufweisen, wobei
- das Fußhorizontalrahmen-Verbindungs-Modul (V101) rahmenfeste Verbindungszapfen (VZR) aufweist, die im Zusammenbauzustand auf ihrer zu dem ersten Mastschuss-Modul (S1) ausgerichteten Seite von dem Fußhorizontalrahmen-Verbindungs-Modul (V101) hervorstehende Zapfenabschnitte aufweisen, in denen vorbereitete Bohrungsöffnungen ausgebildet sind, wobei
- das Horizontalrahmen-Verbindungsmodul (V102, V103) ebenfalls rahmenfeste Verbindungszapfen (VZR) aufweist, die auf ihrer im Zusammenbauzustand zu dem ersten Mastschuss-Modul (S1) ausgerichteten Seite und auf ihrer gegenüberliegenden Seite von dem Horizontalrahmen-Verbindungsmodul (V102, V103) hervorstehende Zapfenabschnitte bilden, in denen ebenfalls vorbereitete Bohrungsöffnungen ausgebildet sind, wobei
- eine Lage der Bohrungsbilder und eine Geometrie der vorbereiteten Bohrungsöffnungen der Bohrungsbilder in allen Zapfenabschnitten im Zusammenbauzustand mit einer Lage der Bohrungsbilder und einer Geometrie der vorbereiteten Bohrungsöffnungen der Bohrungsbilder in allen Aufnahmehülsen (14) der Mastschuss-Module (Sn) übereinstimmen, wobei alle Aufnahmehülsen (14) durch vertikale Eckstielprofile (12) der vorgefertigten Mastschuss-Module (Sn) und jeweils endseitig an den Eckstielprofilen (12) angeordneten Profil-Abschnitten ausgebildet sind, sodass die derart ausgebildeten Aufnahmehülsen(14) in jedem Eckstielprofil (12) der Mastschuss-Module (Sn) endseitige Einstecköffnungen (15) für die Zapfenabschnitte der rahmenfesten Verbindungszapfen (VZR) bilden, die im Zusammenbauzustand in die Einstecköffnungen (15) der Aufnahmehülsen (14) eingesteckt und mittels Sicherungselementen ortsfest gesichert sind.

2. Mast (M), insbesondere Freileitungsmast nach Anspruch 1,
**dadurch gekennzeichnet, dass**
- endseitig des mindestens einen weiteren Mastschuss-Moduls (Sn) oder zwischen dem weiteren Mastschuss-Modul (Sn) und einem noch weiteren Mastschuss-Modul (Sn) ein Horizontalrahmen-Verbindungsmodul (V104, V105) eines dritten Verbindungs-Modultyps angeordnet ist, welches mindestens ein horizontal von dem Horizontalrahmen-Verbindungsmodul (V104, V105) abkragendes Tragelement zum Tragen mindestens einer Freileitung aufweist, wobei
- das Horizontalrahmen-Verbindungsmodul (V104, V105) des dritten Verbindungs-Modultyps ebenfalls die rahmenfesten Verbindungszapfen (VZR) aufweist, die auf ihrer im Zusammenbauzustand zu dem weiteren Mastschuss-Modul (Sn) ausgerichteten Seite und auf ihrer gegenüberliegenden Seite zu dem noch weiteren Mastschuss-Modul (Sn) ausgerichteten Seite von dem Horizontalrahmen-Verbindungsmodul (V104, V105) hervorstehende Zapfenabschnitte bilden, in denen vorbereitete Bohrungsöffnungen ausgebildet sind,
- wobei die Lage der Bohrungsbilder und die Geometrie der vorbereiteten Bohrungsöffnungen der Bohrungsbilder in den Zapfenabschnitten im Zusammenbauzustand ebenfalls mit der Lage der Bohrungsbilder und der Geometrie der vorbereiteten Bohrungsöffnungen der Bohrungsbilder in allen Aufnahmehülsen (14) aller Mastschuss-Module (Sn) übereinstimmen, wobei die Zapfenabschnitte im Zusammenbauzustand in die Einstecköffnungen (15) der Aufnahmehülsen (14) eingesteckt und mittels den Sicherungselementen ortsfest gesichert sind

3. Mast (M) nach einem der vorhergehenden Ansprüche,
**dadurch gekennzeichnet, dass**
- endseitig des mindestens einen weiteren Mastschuss-Moduls (Sn) oder zwischen dem weiteren Mastschuss-Modul (Sn) und einem noch weiteren Mastschuss-Modul (Sn) das Horizontalrahmen-Verbindungsmodul (V102, V103) des zweiten Verbindungs-Modultyps angeordnet ist.

4. Mast (M) nach einem der vorhergehenden Ansprüche,
**dadurch gekennzeichnet, dass**
- in den Einstecköffnungen (15) der Aufnahmehülsen (14) endseitig des mindestens einen weiteren Mastschuss-Moduls (Sn) oder zwischen dem weiteren Mastschuss-Modul (Sn) und einem noch weiteren Mastschuss-Modul (Sn) Einzel-Verbindungszapfen (VZ) angeordnet sind, die auf ihrer im Zusammenbauzustand zu dem weiteren Mastschuss-Modul (Sn) ausgerichteten Seite und auf ihrer gegenüberliegenden Seite zu dem noch weiteren Mastschuss-Modul (Sn) ausgerichteten Seite ebenfalls Zapfenabschnitte bilden, in denen vorbereitete Bohrungsöffnungen ausgebildet sind,
- wobei die Lage der Bohrungsbilder und die Geometrie der vorbereiteten Bohrungsöffnungen der Bohrungsbilder in den Zapfenabschnitten des Einzel-Verbindungszapfens (VZ) im Zusammenbauzustand ebenfalls mit der Lage der Bohrungsbilder und der Geometrie der vorbereiteten Bohrungsöffnungen der Bohrungsbilder in allen Aufnahmehülsen (14) aller Mastschuss-Module (Sn) übereinstimmen, wobei die Zapfenabschnitte im Zusammenbauzustand in die Aufnahmehülsen (14) der Einstecköffnungen (15) eingesteckt und mittels Sicherungselementen ortsfest gesichert sind.

5. Mast (M) nach einem der vorhergehenden Ansprüche,
**dadurch gekennzeichnet, dass**
die Eckstielprofile (12) der Mastschuss-Module (Sn) als L-Profile und die Profil-Abschnitte als L-Profil-Abschnitte (13) ausgebildet sind, wobei die L-Profil-Abschnitte (13) an den L-Profilen der Eckstielprofile (12) derart fixiert, insbesondere verschweißt angeordnet sind, sodass sich rechteckige Aufnahmehülsen (14) mit den Einstecköffnungen (15) bilden.

6. Mast (M) nach einem der vorhergehenden Ansprüche,
**dadurch gekennzeichnet, dass**
die Außenkonturen der Zapfenabschnitte rechteckig sind, wobei die Innenkonturen der Aufnahmehülsen (14) hinsichtlich ihrer geometrischen Maße im Wesentlichen den geometrischen Maßen der Außenkontur der zwischen den Mastschuss-Modulen (Sn) angeordneten Zapfenabschnitte der rahmenfesten Verbindungszapfens VZR oder den Zapfenabschnitten der Einzel-Verbindungszapfen (VZ) entsprechen, wobei die Zapfenabschnitte im Zusammenbauzustand mit Spiel, insbesondere geringem Spiel in die Aufnahmehülsen (14) eingesteckt sind.

7. Mast (M) nach einem der vorhergehenden Ansprüche,
**dadurch gekennzeichnet, dass**
die Stützstruktur (1) vier erste Stützstreben (1A) zur Horizontalabstützung und vier zweite Stützstreben (1B) zur Vertikalabstützung des Mastschaftes umfasst, wobei die vier ersten Stützstreben (1A) zwischen dem Fußhorizontalrahmen-Verbindungs-Modul (V101) des ersten Verbindungs-Modultyps und je einem Auflager und die vier zweiten Stützstreben (1B) zwischen dem Horizontalrahmen-Verbindungsmodul (V102, V103) des zweiten Verbindungs-Modultyps angeordnet sind.

8. Mast (M) nach den Ansprüchen 1 und 7,
**dadurch gekennzeichnet, dass**
die Befestigungsglieder des Fußhorizontalrahmen-Verbindungs-Moduls (V101) des ersten Verbindungs-Modultyps und des Horizontalrahmen-Verbindungsmoduls (V102, V103) des zweiten Verbindungs-Modultyps Flanschaugen (20) sind, und die an den Auflagern angeordneten Befestigungsglieder ebenfalls Flanschaugen (20) sind, wobei die ersten Stützstreben (1A) und die zweiten Stützstreben (1B) jeweils endseitig Bohrungen aufweisen, wobei im Zusammenbauzustand
- die Bohrungen der ersten Stützstreben (1A) einends und die Flanschaugen (20) des Fußhorizontalrahmen-Verbindungs-Moduls (V101) nebeneinander liegend angeordnet sind, und
- die Bohrungen der zweiten Stützstreben (1B) einends und die Flanschaugen (20) des Horizontalrahmen-Verbindungsmoduls (V102, V103) nebeneinander liegend angeordnet sind, und
- die Bohrungen der ersten Stützstreben (1A) anderenends und die Bohrungen der zweiten Stützstreben (1B) anderenends an je einem Flanschauge (20) der Auflager nebeneinander liegend angeordnet sind,
- wobei die Öffnungs-Paarungen von Bohrungen und Flanschaugen (20) an dem Fußhorizontalrahmen-Verbindungs-Modul (V101) des ersten Verbindungs-Modultyps und dem Horizontalrahmen-Verbindungsmodul (V102, V103) des zweiten Verbindungs-Modultyps und
- die Öffnungs-Paarungen von Bohrungen, Flanschaugen (20) und Bohrungen der ersten Stützstreben (1A), der Auflager und der zweiten Stützstreben (1B)
durch Steckverbindungen gesichert sind, indem jeweils ein Sicherungselement, durch die jeweiligen Öffnungs-Paarungen gesteckt ist, sodass die ersten und zweiten Stützstreben (1A, 1B) um die Sicherungselemente drehbar jeweils einends lagefixiert am Mastschaft und jeweils anderenends an den Auflagern angeordnet sind.

9. Mast (M) nach einem der vorhergehenden Ansprüche,
**dadurch gekennzeichnet, dass**
die zweiten Stützstreben (1B) teleskopierbar aus Teilstreben ausgebildet sind, wobei die Teilstreben an ihren dem Mastschaft und ihren dem Auflager gegenüberliegenden Enden ineinander/aneinander greifen und einen Eingriffsbereich bilden, wobei die Teilstreben in diesem Eingriffsbereich ein vorgegebenes Bohrungsraster aufweisen, sodass die Länge der zweiten Stützstreben (1B) frei einstellbar ist, indem ein Sicherungselement in Abhängigkeit einer erforderlichen Länge der zweiten Stützstreben (1B) durch je eine Bohrung im Bohrungsraster der Teilstreben angeordnet ist.

10. Mast (M) nach einem der vorhergehenden Ansprüche,
**dadurch gekennzeichnet, dass**
die Stützstruktur (1) acht Leiterstrukturen umfasst, wobei zwei Grundholme als je eine Stützstrebe (1A, 1B) mit den jeweils endseitig ausgebildeten Bohrungen ausgebildet sind, wobei zwischen den Grundholmen ein Gitterfachwerk ausgebildet ist, das zwischen den Grundholmen ausgebildet ist, wobei vier der acht Leiterstrukturen mit den zwei Grundholmen als Teilgrundholme teleskopierbar ausgebildet sind und somit Teilstreben der zweiten Stützstreben (1B) bilden, sodass die zwei Grundholme der teleskopierbaren Leiterstrukturen ihren dem Mastschaft und ihren dem Auflager gegenüberliegenden Enden ineinander/aneinander greifen und den Eingriffsbereich bilden.

11. Mast (M) nach einem der vorhergehenden Ansprüche,
**dadurch gekennzeichnet, dass**
jedes Auflager als Befestigungsglied/er ein Flanschauge (20) oder mehrere zueinander beabstandete Flanschaugen (20) aufweist, sodass die endseitigen Bohrungen der ersten und zweiten Stützstreben (1A, 1B) oder endseitigen Bohrungen der Grundholme der als Leiterstruktur ausgebildeten der ersten und zweiten Stützstreben (1A, 1B) der Stützstruktur (1) durch Sicherungselemente drehbar jeweils einends lagefixiert am Mastschaft und jeweils anderenends an den Auflagern an den Flanschaugen (20) des Auflagers befestigt sind.

12. Mast (M) nach einem der vorhergehenden Ansprüche,
**dadurch gekennzeichnet, dass**
die Auflager als modular ausgebildete Auflastrahmen (1D) ausgebildet sind, wobei der jeweilige Auflastrahmen (1D) in Modultypen dafür eingerichtet ist, dass
- der Auflastrahmen auflastrahmenfeste Aufnahmen aufweist, sodass er an einem vorbereiteten Fundament als Gründung befestigt, insbesondere verschraubt werden kann, oder
- der Auflastrahmen auflastrahmenfeste Aufnahmen aufweist, sodass gründungsfrei mindestens ein Auflastgewicht in die auflastrahmenfesten Aufnahmen eingebracht werden kann, oder
- der Auflastrahmen auflastrahmenfeste Aufnahmen aufweist, die mindestens eine auflastrahmenfeste Aufnahme bilden, in der mindestens ein oder bei mehreren auflastrahmenfesten Aufnahmen ein oder mehrere Kleinverpresspfähle als Gründung, oder
- der Auflastrahmen auflastrahmenfeste Aufnahmen aufweist, die mindestens eine auflastrahmenfeste Aufnahme bilden, in der gegründete Fundamentschrauben angeordnet sind, wobei
der Mast (M) mittels der Stützstruktur (1) ausschließlich an Auflastrahmen (1D) eines Modultyps oder eine Kombination der Modultypen abgestützt ist.

13. Mast (M) nach einem der vorhergehenden Ansprüche,
**dadurch gekennzeichnet, dass**
der Auflastrahmen (1D) einen oder mehrere Anschlagsteg/e (1C) aufweist, der/die als Befestigungsglieder mindestens ein Flanschauge (20) oder an zueinander parallel beabstandeten Anschlagstegen (1C) jeweils mindestens ein Flanschauge (20) aufweist.

14. Modulares Mast-System zur Errichtung eines Mastes (M), insbesondere eines Freileitungsmastes, wobei das Mast-System Mastbauteile und Auflager nach mindestens einem der Ansprüche 1 bis 13 umfasst, zumindest umfassend
- mindestens zwei Mastschuss-Module (Sn) gleicher oder unterschiedlicher Baulänge/n mit gleichartig ausgebildeten Aufnahmehülsen (14) endseitig der Eckstielprofile (12) der Mastschuss-Module (Sn),
- eine Stützstruktur (1),
- ein Fußhorizontalrahmen-Verbindungs-Modul (V101) eines ersten Verbindungs-Modultyps, das einseitig zu dem Fußhorizontalrahmen-Verbindungs-Modul (V101) ausgerichtete rahmenfeste Verbindungszapfen (VZR) und Befestigungsglieder zur Befestigung an der Stützstruktur (1) aufweist, und
- mindestens ein Horizontalrahmen-Verbindungsmodul (V102, V103) eines zweiten Verbindungs-Modultyps das beidseitig zu je einem Mastschuss-Modul (Sn) ausgerichtete rahmenfeste Verbindungszapfen (VZR) und Befestigungsglieder zur Befestigung der Stützstruktur (1) aufweist,
- vier Auflastrahmen (1D) eines Modultyps oder mehrerer Modultypen in Kombination als Auflager zum Abstützen des Mastes (M) mit der Stützstruktur (1),
und in Kombination mit den vorhergehenden Mastbauteilen ferner umfassend,
- mindestens ein Horizontalrahmen-Verbindungsmodul (V104, V105) eines dritten Verbindungs-Modultyps das beidseitig zu je einem Mastschuss-Modul (Sn) ausgerichtete rahmenfeste Verbindungszapfen (VZR) und mindestens ein horizontal von dem Horizontalrahmen-Verbindungsmodul (V104, V105) abkragendes Tragelement zum Tragen mindestens einer Freileitung aufweist,
und in Kombination mit den vorhergehenden Mastbauteilen ferner umfassend,
- rahmenlose Einzel-Verbindungszapfen (VZ),
wobei die rahmenlosen Einzel-Verbindungszapfen (VZ) und die rahmenfesten Verbindungszapfen (VZR) Zapfenabschnitte aufweisen, die Bohrungsbilder mit Bohrungsöffnungen aufweisen, die im Zusammenbauzustand des Mastes (M) hinsichtlich ihrer Lage und der Geometrie der Bohrungsöffnungen in allen Zapfenabschnitten mit der Lage der Bohrungsbilder und der Geometrie der Bohrungsöffnungen der Bohrungsbilder in allen Aufnahmehülsen (14) der Mastschuss-Module (Sn) übereinstimmen, wobei alle Aufnahmehülsen (14) durch vertikale Eckstielprofile (12) der vorgefertigten Mastschuss-Module (Sn) und jeweils endseitig an den Eckstielprofilen (12) angeordneten Profil-Abschnitten ausgebildet sind, sodass die derart ausgebildeten Aufnahmehülsen(14) in jedem Eckstielprofil (12) der Mastschuss-Module (Sn) endseitige Einstecköffnungen (15) für die Zapfenabschnitte der rahmenfesten Verbindungszapfen (VZR) oder der rahmenlosen Einzel-Verbindungszapfen (VZ) und der rahmenfesten Verbindungszapfens (VZR) bilden, die im Zusammenbauzustand in die Einstecköffnungen (15) der Aufnahmehülsen (14) eingesteckt und dort gesichert fixiert sind.
